# EUROPEAN PATENT APPLICATION

(11) **EP 2 821 253 A1**
(43) Date of publication of application: **07.01.2015**
(21) Application number: 13755148.7
(22) Date of filing: 28.02.2013
(51) Int. Cl.: B60C 5/01, B60C 1/00, C08L 67/00, C08L 77/00, C08L 101/00

(54) **TIRE**

(30) Priority: 29.02.2012 JP 2012044595
(71) Applicant: Bridgestone Corporation, Tokyo 104-8340 (JP)
(72) Inventor: FUDEMOTO, Hiroyuki, Tokyo 104-8340 (JP); HARADA, Takashi, Tokyo 104-8340 (JP)
(74) Representative: Oxley, Robin John George
(86) International application number: PCT/JP2013/055586
(87) International publication number: WO 2013/129631

(57) **Abstract**

A tire including a tire frame formed from a resin material in a ring shape, wherein the resin material has a bending elastic modulus of from 100 MPa to 1000 MPa.

## Description

### Technical Field

The present invention relates to a tire to be fitted to a rim, and in particular relates to a tire in which at least a portion of a tire case is formed from a resin material.

### Background Art

Pneumatic tires which are composed of rubber, organic fiber materials, steel members, and the like have been conventionally employed in vehicles such as passenger cars.

Recently, the use of resin materials, in particular thermoplastic resins, thermoplastic elastomers, and the like, as tire materials have been investigated from the perspectives of weight reduction, ease of molding, and ease of recycling.
For example, Patent Document 1 (Japanese Patent Application Laid-Open (JP-A) No. 2003-104008) and Patent Document 2 (JP-A No. H03-143701) disclose a pneumatic tire molded from a thermoplastic polymer material.

There is also a proposal for a pneumatic tire composed of polymer materials such as plural rubbers, thermoplastic resins of the like, wherein the rigidity gradually decreases from a center position of a crown portion to a shoulder portion, and furthermore across to a maximum width position of a side wall portion, and the rigidity also gradually increases from the maximum width position of the side wall portion across to a bead portion (see, for example, Patent Document 3 (Japanese Patent No. 4501326)).

### Related Art Publications

Patent Document 1: JP-ANo. 2003-104008
Patent Document 2: JP-ANo. H03-143701
Patent Document 3: Japanese Patent No. 4501326

### SUMMARY OF INVENTION

### Technical Problem to be Solved

A tire using a thermoplastic polymer material is more easily manufactured and lower in cost than a conventional rubber-made tire. However, in cases in which a tire frame is formed with a uniform thermoplastic polymer material and is internally equipped with a reinforcement member, such as a carcass ply or the like, there is still room for improvement from viewpoints such as stress resistance, internal pressure resistance, and the like, compared to a conventional rubber-made tire.
As performance demanded in tires, there is also demand for excellent ride comfort that damps of shock from the road surface.

In this regard, a tire is disclosed in Patent Document 3 that combines plural polymer materials to give a specified rigidity. However, in the document, it is only described with respect to ride comfort that no twisted cord is present, that ride comfort is improved, and that ride comfort deteriorate when the Young's modulus of polymer material composing a tire frame member is excessively high.

In consideration of the above circumstances, an object of the invention is to provide a tire that is formed using a resin material and that has excellent ride comfort.

### Solution to Problem

(1) A tire including a tire frame formed from a resin material and has a ring shape, wherein the resin material has a bending elastic modulus of from 100 MPa to 1000 MPa. Advantageous Effects of Invention

The invention enables provision of a tire formed using a resin material and having excellent ride comfort.

### BRIEF DESCRIPTION OF DRAWINGS

Fig. 1A is a perspective view illustrating a cross-section of a portion of a tire according to an embodiment of the invention.
Fig. 1B is a cross-section of a bead portion fitted to a rim.
Fig. 2 is a cross-section taken along the tire rotation axis of a tire of a first embodiment, and illustrating a state in which reinforcement cord is embedded in a crown portion of a tire case of a first embodiment.
Fig. 3 is an explanatory diagram to explain an operation to embed the reinforcement cord in the crown portion of a tire case using a cord heating device and rollers.
Fig. 4A is a cross-section taken along the tire width direction of a tire of an embodiment of the invention.
Fig. 4B is an enlarged cross-section taken along the tire width direction of a bead portion, in a fitted state of a rim to the tire.
Fig. 5 is a cross-section taken along the tire width direction and illustrating the periphery of a reinforcement layer of a tire according to the second embodiment.

### DESCRIPTION OF EMBODIMENTS

The tire of the invention includes: at least a tire frame formed from a resin material and has a ring shape, wherein the resin material has a bending elastic modulus of from 100 MPa to 1000 MPa. The "bending elastic modulus" refers to the bending elastic modulus as specified by JIS K7171 (1994). Namely, the bending elastic modulus refers to a value measured using a 4 mm thick, 10 mm × 100 mm test piece formed from the resin material, with test conditions of a test speed of 2 mm/min², a distance between support points L = 64 mm, an indenter radius R1 = 5 mm, and a radius of support R2 = 5 mm.

According to the tire of the invention, the ride comfort of a tire can be improved by employing a resin material having a bending elastic modulus of from 100 MPa to 1000 MPa as the resin material contained in a tire frame. Moreover, due to forming the tire with a resin material, a vulcanization process which is an essential process in a conventional rubber-made tire, is not essentially required. For example, the tire frame can be formed by injection molding or the like. Moreover, employing a resin material for the tire frame enables the structure of a tire to be simplified compared to a conventional rubber-made tire, and as a result enables a tire weight reduction to be achieved. The "ride comfort" of a tire refers to the ride comfort experienced when driving a vehicle mounted with the tires. Normally, ride comfort is improved by dampening shock from the road surface with a tire.
When the bending elastic modulus is less than 100 MPa, the shape cannot be maintained and deformation of the shape may occur as the bending elastic modulus is too low. When the bending elastic modulus exceeds 1000 MPa, shock from the road surface cannot be sufficiently dampened as the bending elastic modulus is too high. The bending elastic modulus of the resin material is preferably from 100 MPa to 700 MPa.

Explanation follows regarding the resin material contained in the tire frame in the invention, and then explanation follows regarding specific embodiments of the tire of the invention, with reference to the drawings.

### Resin Material

A resin material in the invention includes a resin, and the resin is selected such that the bending elastic modulus of the resin material is from 100 MPa to 1000 MPa.

In the invention, the "resin material" contains a resin (a resin component), and may contain other components, such as additives. The resin material is composed solely of resin(s) in cases in which the resin material does not contain any components other than resin component(s).

In the present specification, "resin" encompasses thermoplastic resins and thermosetting resins, but does not encompass natural rubber. In addition, thermoplastic resins encompass thermoplastic elastomers.
"Elastomer" used here refers to a resin formed from a copolymer including a crystalline polymer forming a hard segment with a high melting point or forming a hard segment with a high cohesion force, and an amorphous polymer forming a soft segment with a low glass transition temperature.

### Resin

Examples of the resin include thermoplastic resins (which encompass thermoplastic elastomers), thermoset resins, and the like. As the resin material, for example, a single thermoplastic elastomer, described below, may be used. The resin material may include a combination of two or more thereof, or may include a combination of a thermoplastic elastomer and a non-elastomer thermoplastic resin. In cases in which the resin material includes a single resin alone, the bending elastic modulus of the resin is the bending elastic modulus of the resin material.

The resin material forming the tire frame is preferably a thermoplastic resin, and is more preferably a thermoplastic elastomer. Explanation follows regarding the resin employed in the resin material to form the tire frame, focusing on thermoplastic resins.

### Thermoplastic Resins (which encompass Thermoplastic Elastomers)

Thermoplastic resins (which encompass thermoplastic elastomers) refer to polymer compounds that materially soften and flow with increasing temperature, and that adopt a relatively hard and strong state on cooling.

In the present specification, out of these, from among these thermoplastic resins, polymer compounds that materially soften and flow with increasing temperature, that adopt a relatively hard and strong state on cooling, and that have a rubber-like elasticity are considered to be thermoplastic elastomers. To discriminate therefrom, from among thermoplastic resins, polymer compounds that materially soften and flow with increasing temperature, that adopt a relatively hard and strong state on cooling, but do not have a rubber-like elasticity, are referred to as non-elastomer thermoplastic resins.

Examples of thermoplastic resins (which encompass thermoplastic elastomers) include thermoplastic polyolefin-based elastomers (TPO), thermoplastic polystyrene-based elastomers (TPS), thermoplastic polyamide-based elastomers (TPA), thermoplastic polyurethane-based elastomers (TPU), thermoplastic polyester-based elastomers (TPC), and dynamically crosslinking-type thermoplastic elastomers (TPV), as well as non-elastomer thermoplastic polyolefin-based resins, non-elastomer thermoplastic polystyrene-based resins, non-elastomer thermoplastic polyamide-based resins, and non-elastomer thermoplastic polyester-based resins. As the thermoplastic resin included in the resin material, at least one selected from thermoplastic polyester-based elastomers or thermoplastic polyamide-based elastomers is preferable.

### Thermoplastic Polyester-based Elastomer

Examples of the thermoplastic polyester-based elastomer include materials with at least a crystalline polyester forming a hard segment with a high melting point, and another polymer (such as a polyester or a polyether) that is amorphous and forms a soft segment with a low glass transition temperature. The thermoplastic polyester-based elastomer is also referred to as "TPC" (ThermoPlastic polyester elastomer).

An aromatic polyester may be employed as the polyester that forms the hard segment. The aromatic polyester may be formed from, for example, an aromatic dicarboxylic acid or an ester-forming derivative thereof, and an aliphatic diol. The aromatic polyester is preferably polybutylene terephthalate derived from terephthalic acid and/or dimethyl terephthalate, and 1,4-butanediol. In addition, the aromatic polyester may be a polyester derived from: a dicarboxylic acid component such as isophthalic acid, phthalic acid, naphthalene-2,6-dicarboxylic acid, naphthalene-2,7-dicarboxylic acid, diphenyl-4,4'-dicarboxylic acid, diphenoxyethane dicarboxylic acid, 5-sulfoisophthalic acid, or an ester-forming derivative thereof; and a diol with a molecular weight of 300 or less, for example, an aliphatic diol such as ethylene glycol, trimethylene glycol, pentamethylene glycol, hexamethylene glycol, neopentyl glycol, or decamethylene glycol, an alicyclic diol such as 1,4-cyclohexane dimethanol or tricyclodecane dimethylol, or an aromatic diol such as xylylene glycol, bis(p-hydroxy)diphenyl, bis(p-hydroxyphenyl)propane, 2,2-bis[4-(2-hydroxyethoxy)phenyl]propane, bis[4-(2-hydroxy)phenyl]sulfone, 1,1-bis[4-(2-hydroxyethoxy)phenyl]cyclohexane, 4,4'-dihydroxy-p-terphenyl, or 4,4'-dihydroxy-p-quaterphenyl. Additionally, the aromatic polyester may be a copolymerized polyester in which two or more of the above dicarboxylic acid components and/or two or more of the above diol components may be used in combination. Copolymerization can also be made with a polyfunctional carboxylic acid component having three or more functional groups, a polyfunctional oxyacid component, or a polyfunctional hydroxy component, in a range of 5% by mol or less.
Examples of polyesters to form the hard segment include polyethylene terephthalate, polybutylene terephthalate, polymethylene terephthalate, polyethylene naphthalate, and polybutylene naphthalate, and polybutylene terephthalate is preferable.

Examples of polymers to form the soft segment include aliphatic polyesters, and aliphatic polyethers.
Examples of the aliphatic polyether include poly(ethylene oxide)glycol, poly(propylene oxide)glycol, poly(tetramethylene oxide)glycol, poly(hexamethylene oxide)glycol, a copolymer of ethylene oxide and propylene oxide, an ethylene oxide addition polymer of poly(propylene oxide)glycol, and a copolymer of ethylene oxide and tetrahydrofuran. Examples of the aliphatic polyester include poly(ε-caprolactone), polyenantholactone, polycaprylolactone, polybutylene adipate, and polyethylene adipate.
Of these aliphatic polyethers and aliphatic polyesters, poly(tetramethylene oxide)glycol, ethylene oxide adducts of poly(propylene oxide)glycol, poly(ε-caprolactone), polybutylene adipate, polyethylene adipate, or the like is preferable from the viewpoint of the elasticity characteristics of the polyester block copolymer to be obtained.

The number average molecular weight of the polymer forming the soft segment is preferably from 300 to 6000 from the viewpoints of toughness and flexibility at low temperature. The mass ratio (x:y) of the hard segment (x) to the soft segment (y) is preferably from 99:1 to 20:80, and still more preferably from 98:2 to 30:70 from the viewpoint of formability.

Examples of the combination of the hard segment and the soft segment may include respective combinations of the example of hard segment(s) and the example of soft segment(s) described above. Of these, a combination in which the hard segment is polybutylene terephthalate, and the soft segment is an aliphatic polyether is preferable, and a combination in which the hard segment is polybutylene terephthalate, and the soft segment is poly(ethylene oxide)glycol is still more preferable.

As the thermoplastic polyester-based elastomer, for example, "HYTREL" series (such as, for example, 3046, 5557, 6347, 4047, and 7247), manufactured by Du Pont-Toray Co., Ltd., and "PELPRENE" series (such as P30B, P40B, P40H, P55B, P70B, P150B, P280B, P450B, P150M, S1001, S2001, S5001, S6001, S9001), manufactured by Toyobo Co., Ltd, which are commercial products, may be employed.

### Thermoplastic Polyamide-based Elastomer

In the invention, "thermoplastic polyamide-based elastomer" refers to a thermoplastic resin material that is formed from a copolymer having a crystalline polymer forming a hard segment with a high melting point, and an amorphous polymer forming a soft segment with a low glass transition temperature, wherein the polymer forming the hard segment has amide bonds (-CONH-) in the main chain thereof.

### The thermoplastic polyamide-based elastomer is also referred to as simply "TPA"

### (ThermoPlastic Amide elastomer).

Examples of the thermoplastic polyamide-based elastomer include materials in which at least a polyamide forms the hard segment that is crystalline and has a high melting point, and an another polymer (such as, for example, a polyester, or a polyether) forms the soft segment that is amorphous and has a low glass transition temperature. The thermoplastic polyamide-based elastomer may also employ a chain extender, such as a dicarboxylic acid, other than the hard segment and the soft segment. Examples of polyamides forming the hard segment include, for example, polyamides derived from a monomer represented by the following Formula (1) or Formula (2).

Formula (1) H₂N-R¹-COOH

In Formula (1), R¹ represents a hydrocarbon molecular chain having from 2 to 20 carbon atoms, or a alkylene group having from 2 to 20 carbon atoms.

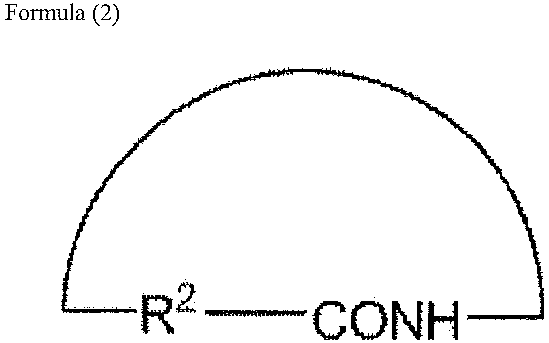

In Formula (2), R² represents a hydrocarbon molecular chain having from 3 to 20 carbon atoms, or an alkylene group having from 3 to 20 carbon atoms.

R¹ in Formula (1) is preferably a hydrocarbon molecular chain having from 3 to 18 carbon atoms, or an alkylene group having from 3 to 18 carbon atoms, still more preferably a hydrocarbon molecular chain having from 4 to 15 carbon atoms, or an alkylene group having from 4 to 15 carbon atoms, and particularly preferably a hydrocarbon molecular chain having from 10 to 15 carbon atoms, or an alkylene group having from 10 to 15 carbon atoms. R² in Formula (2) is preferably a hydrocarbon molecular chain having from 3 to 18 carbon atoms, or an alkylene group having from 3 to 18 carbon atoms, is still more preferably a hydrocarbon molecular chain having from 4 to 15 carbon atoms, or an alkylene group having from 4 to 15 carbon atoms, and is particularly preferably a hydrocarbon molecular chain having from 10 to 15 carbon atoms, or an alkylene group having from 10 to 15 carbon atoms.
Examples of the monomers represented by Formula (1) or Formula (2) above include ω-aminocarboxylic acids and lactams. Examples of the polyamide that forms the hard segment include polycondensates of a ω-aminocarboxylic acid or a lactam described above, and polycondensates of a diamine and a dicarboxylic acid.

Examples of the ω-aminocarboxylic acid include aliphatic ω-aminocarboxylic acids having from 5 to 20 carbon atoms, such as 6-aminocaproic acid, 7-aminoheptanoic acid, 8-aminooctanoic acid, 10-aminocapric acid, 11-aminoundecanoic acid, or 12-aminododecanoic acid. Examples of the lactam include aliphatic lactams having from 5 to 20 carbon atoms, such as lauryl lactam, ω-caprolactam, undecane lactam, ω-enantholactam, or 2-pyrrolidone.

Examples of the diamine include diamine compounds such as aliphatic diamines having from 2 to 20 carbon atoms such as ethylene diamine, trimethylene diamine, tetramethylene diamine, hexamethylene diamine, heptamethylene diamine, octamethylene diamine, nonamethylene diamine, decamethylene diamine, undecamethylene diamine, dodecamethylene diamine, 2,2,4-trimethylhexamethylene diamine, 2,4,4-trimethylhexamethylene diamine, 3-methylpentamethylene diamine, or metaxylene diamine. The dicarboxylic acids may be represented by HOOC-(R³)m-COOH (wherein, R³: a hydrocarbon molecular chain having from 3 to 20 carbon atoms, m: 0 or 1) may represent; for example, an aliphatic dicarboxylic acid having from 2 to 20 carbon atoms such as oxalic acid, succinic acid, glutaric acid, adipic acid, pimelic acid, suberic acid, azelaic acid, sebacic acid, or dodecanedioic acid.
A polyamide formed by ring-opening polycondensation of lauryl lactam, ε-caprolactam or undecane lactam may be preferably employed as the polyamide that forms the hard segment.

Examples of the polymer that forms the soft segment include polyesters and polyethers, with examples thereof including polyethylene glycol, polypropylene glycol, polytetramethylene ether glycol, and ABA-type triblock polyethers. These may be employed singly, or in a combination of two or more thereof. A polyether diamine or the like, obtained via a reaction of ammonia or the like with a terminal of a polyether, may be employed.
Herein, "ABA-type triblock polyether" indicates a polyether represented by Formula (3) below.

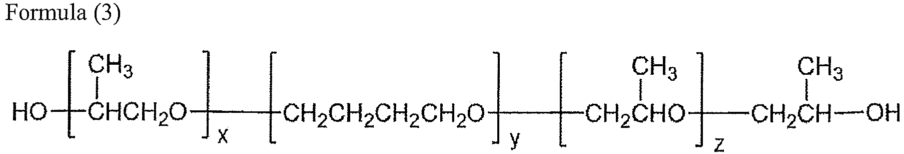

In Formula (3), x and z independently represent integers of from 1 to 20. y represents an integer of from 4 to 50.

As the respective values of x and z in Formula (3), integers of from 1 to 18 are preferable, integers of from 1 to 16 are still more preferable, integers of from 1 to 14 are particularly preferable, and integers of from 1 to 12 are most preferable. As the value of y in Formula (3), an integer of, respectively, from 5 to 45 is preferable, an integer of from 6 to 40 is more preferable, an integer of from 7 to 35 is particularly preferable, and an integer of from 8 to 30 is most preferable.

Examples of the combination of the hard segment and the soft segment include respective combinations of the hard segments and the soft segments described above. Preferable combinations from among these are a combination of a ring-opening polycondensate of lauryl lactam and polyethylene glycol, a combination of a ring-opening polycondensate of lauryl lactam and polypropylene glycol, a combination of a ring-opening polycondensate of lauryl lactam and polytetramethylene ether glycol, and a combination of a ring-opening polycondensate of lauryl lactam and an ABA-type triblock polyether. The combination of a ring-opening polycondensate of lauryl lactam and an ABA-type triblock polyether is particularly preferable.

The number average molecular weight of the polymer (polyamide) forming the hard segment is preferably from 300 to 30000 from the viewpoint of melting and forming property. The number average molecular weight of the polymer forming the soft segment is preferably from 200 to 20000 from the viewpoints of toughness and low temperature flexibility. The mass ratio (x:y) of the hard segment (x) to the soft segment (y) is preferably from 50:50 to 90:10, and is more preferably from 50:50 to 80:20 from the viewpoint of formability.

The thermoplastic polyamide-based elastomer may be synthesized using a known method to copolymerize the polymer forming the hard segment and the polymer forming the soft segment.

As the thermoplastic polyamide-based elastomer, for example, the "UBESTAXPA" series (examples include XPA9063X1, XPA9055X1, XPA9048X2, XPA9048X1, XPA9040X1, XPA9040X2, and XPA9044), manufactured by Ube Industries, Ltd., and the "VESTAMID" series (for example, E40-S3, E47-S1, E47-S3, E55-S1, E55-S3, E55-S4, E55-K1W2, EX9200, and E50-R2), manufactured by Daicel-Evonik Ltd., which are commercial products, may be employed.

### Thermoplastic Polyolefin-based Elastomer

Examples of the "thermoplastic polyolefin-based elastomer" include materials with at least a crystalline polyolefin forming the hard segment with a high melting point, and another polymer (for example the polyolefins or other polyolefins) that is amorphous and forms the soft segment with a low glass transition temperature. Examples of polyolefins to form the hard segment include, for example, polyethylene, polypropylene, isotactic polypropylene, and polybutene.
Thermoplastic polyolefin-based elastomers are also referred to as simply ThermoPlastic Olefin elastomers (TPO).

The thermoplastic polyolefin-based elastomer is not particularly limited, and examples thereof include copolymers with a crystalline polyolefin forming the hard segment with a high melting point, and with an amorphous polymer forming the soft segment with a low glass transition temperature.

Examples of the thermoplastic polyolefin-based elastomer include olefin-α-olefin random copolymers, and olefin block copolymers, with examples thereof including propylene block copolymers, ethylene-propylene copolymers, propylene-1-hexene copolymers, propylene-4-methyl-lpentene copolymers, propylene-1-butene copolymers, ethylene-1-hexene copolymers, ethylene-4-methyl-pentene copolymers, ethylene-1-butene copolymers, 1-butene-1-hexene copolymers, 1-butene-4-methyl-pentene, ethylene-methacrylic acid copolymers, ethylene-methyl methacrylate copolymers, ethylene-ethyl methacrylate copolymers, ethylene-butyl methacrylate copolymers, ethylene-methylacrylate copolymers, ethylene-ethylacrylate copolymers, ethylene-butylacrylate copolymers, propylene-methacrylic acid copolymers, propylene-methyl methacrylate copolymers, propylene-ethyl methacrylate copolymers, propylene-butyl methacrylate copolymers, propylene-methyl acrylate copolymers, propylene-ethyl acrylate copolymers, propylene-butyl acrylate copolymers, ethylene- vinyl acetate copolymers, and propylene-vinyl acetate copolymers.

Preferable examples of the thermoplastic polyolefin-based elastomer include propylene block copolymers, ethylene-propylene copolymers, propylene-1-hexene copolymers, propylene-4-methyl-1pentene copolymers, propylene-1-butene copolymers, ethylene-1-hexene copolymers, ethylene-4-methyl-pentene copolymers, ethylene-1-butene copolymers, ethylene-methacrylic acid copolymers, ethylene-methyl methacrylate copolymers, ethylene-ethyl methacrylate copolymers, ethylene-butyl methacrylate copolymers, ethylene-methyl acrylate copolymers, ethylene-ethyl acrylate copolymers, ethylene-butyl acrylate copolymers, propylene-methacrylic acid copolymers, propylene-methyl methacrylate copolymers, propylene-ethyl methacrylate copolymers, propylene-butyl methacrylate copolymers, propylene-methyl acrylate copolymers, propylene-ethyl acrylate copolymers, propylene-butyl acrylate copolymers, ethylene-vinyl acetate copolymers, and propylene-vinyl acetate copolymers, and still more preferable examples thereof include ethylene-propylene copolymers, propylene-1-butene copolymers, ethylene-1-butene copolymers, ethylene-methyl methacrylate copolymers, ethylene-methyl acrylate copolymers, ethylene-ethyl acrylate copolymers, and ethylene-butyl acrylate copolymers.
Two or more polyolefin resins, such as ethylene and propylene, may be used in combination. The polyolefin content ratio in the thermoplastic polyolefin-based elastomer is preferably from 50% by mass to 100% by mass.

The number average molecular weight of the thermoplastic polyolefin-based elastomer is preferably from 5,000 to 10,000,000. When the number average molecular weight of the thermoplastic polyolefin-based elastomer is from 5,000 to 10,000,000, the resin material has sufficient mechanical physical properties and excellent workability. From similar viewpoints, the number average molecular weight is more preferably from 7,000 to 1,000,000, and is particularly preferably from 10,000 to 1,000,000. Thereby the mechanical physical properties and workability of the resin material can be further improved. The number average molecular weight of the polymer forming the soft segment is preferably from 200 to 6000 from the viewpoint of toughness and low temperature flexibility. The mass ratio (x:y) of the hard segment (x) to the soft segment (y) is preferably from 50:50 to 95:5, and is still more preferably from 50:50 to 90:10 from the viewpoint of formability.

The thermoplastic polyolefin-based elastomer may be synthesized using a known method to copolymerize a polymer forming a hard segment and a polymer forming a soft segment.

An acid-modified thermoplastic elastomer may be used as the thermoplastic polyolefin elastomer.
The "acid-modified thermoplastic polyolefin elastomer" refers to a thermoplastic polyolefin elastomer to which an unsaturated compound having an acid group such as a carboxylic acid group, a sulfuric acid group, or a phosphoric acid group, is bonded. For example, when an unsaturated carboxylic acid (generally, maleic acid anhydride) is employed as the unsaturated compound having an acid group, an unsaturated bond site of the unsaturated carboxylic acid is bonded to (for example, by graft polymerization) a thermoplastic olefin-based elastomer.

From the viewpoint of suppressing degradation of the thermoplastic polyolefin elastomer, the compound having an acid group is preferably a compound having a carboxylic acid group that is a weak acid group, with examples including acrylic acid, methacrylic acid, itaconic acid, crotonic acid, isocrotonic acid, and maleic acid.

As the thermoplastic polyolefin-based elastomer described above, the "TAFMER" series (for example, A0550S, A1050S, A4050S, A1070S, A4070S, A35070S, A1085S, A4085S, A7090, A70090, MH7007, MH7010, XM-7070, XM-7080, BL4000, BL2481, BL3110, BL3450, P-0275, P-0375, P-0775, P-0180, P-0280, P-0480, and P-0680), manufactured by Mitsui Chemicals, Inc., the "NUCREL" series (for example, AN4214C, AN4225C, AN42115C, N0903HC, N0908C, AN42012C, N410, N1050H, N1108C, N1110H, N1207C, N1214, AN4221C, N1525, N1560, N0200H, AN4228C, AN4213C, and N035C), the "Elvaloy AC" series (for example, 1125AC, 1209AC, 1218AC, 1609AC, 1820AC, 1913AC, 2112AC, 2116AC, 2615AC, 2715AC, 3117AC, 3427AC, and 3717AC), manufactured by Du Pont-Mitsui Polychemicals Co., Ltd., the "ACRYFT" series and products from the "EVATATE" series, manufactured by Sumitomo Chemical Co., Ltd., and the "ULTRATHENE" series, manufactured by Tosoh Corporation, which are commercial products, may be used.
As the thermoplastic polyolefin-based elastomer, for example, the "PRIME TPO" series (examples include, E-2900H, F-3900H, E-2900, F-3900, J-5900, E-2910, F-3910, J-5910, E-2710, F-3710, J-5710, E-2740, F-3740, R110MP, R110E, T310E, and M142E), manufactured by Prime Polymer Co., Ltd., and "ESPOLEX 903", manufactured by Sumitomo Chemical Co., Ltd., and "THERMORUN 5850", manufactured by Mitsubishi Chemical Corporation, which are commercial products, may also be used.

### Thermoplastic Polystyrene-based Elastomer

Examples of the thermoplastic polystyrene-based elastomer include materials with at least polystyrene forming the hard segment, and with another polymer (for example polybutadiene, polyisoprene, polyethylene, hydrogenated polybutadiene, hydrogenated polyisoprene, or the like) forming the soft segment with a low glass transition temperature. Synthetic rubbers, such as vulcanized SBR resins or the like, may be used as the thermoplastic polystyrene-based elastomer.
Thermoplastic polystyrene-based elastomers are also referred to as ThermoPlastic Styrene elastomers (TPS).

Either an acid-modified thermoplastic polystyrene-based elastomer modified with an acid group, or an unmodified thermoplastic polystyrene-based elastomer may be employed as the thermoplastic polystyrene-based elastomer.

As polystyrenes that forms the hard segment, for example, those obtained using known radical polymerization methods, or those obtained using known ionic polymerization methods, for example a polystyrene with an anionic living polymerization may be suitably used. Examples of polymers for forming the soft segment include, for example, polybutadiene, polyisoprene, poly(2,3-dimethyl-butadiene), and the like. The acid-modified thermoplastic polystyrene-based elastomer may be obtained by acid-modifying an unmodified thermoplastic polystyrene-based elastomer, as described below.

The combination of the hard segment and the soft segment include respective combinations of the hard segment described above and the soft segment described above.
Of these, a combination of polystyrene/polybutadiene, or a combination of polystyrene/polyisoprene is preferable. The soft segment is preferably hydrogenated in order to suppress unintended crosslinking reactions of the thermoplastic elastomer.

The number average molecular weight of the polymer (polystyrene) forming the hard segment is preferably from 5000 to 500000, and preferably from 10000 to 200000.
The number average molecular weight of the polymer(s) forming the soft segment is preferably from 5000 to 1000000, more preferably from 10000 to 800000, and particularly preferably from 30000 to 500000. The volume ratio (x:y) of the hard segment (x) to the soft segment (y) is preferably from 5:95 to 80:20, and still more preferably from 10:90 to 70:30 from the viewpoint of formability.

The thermoplastic polystyrene-based elastomer may be synthesized using a known method to copolymerize a polymer forming a hard segment and a polymer forming a soft segment.
Examples of the thermoplastic polystyrene-based elastomer include styrene-butadiene-based copolymers [SBS (polystyrene-poly(butylene)block-polystyrene), and SEBS (polystyrene-poly(ethylene/butylene)block-polystyrene)], styrene-isoprene copolymers [polystyrene-polyisoprene block-polystyrene)], and styrene-propylene-based copolymers [SEP (polystyrene-(ethylene/propylene)block), SEPS (polystyrene-poly(ethylene/propylene)block-polystyrene), SEEPS (polystyrene-poly(ethylene-ethylene/propylene)block-polystyrene), and SEB (polystyrene (ethylene/butylene)block)], and SEBS is particularly preferable.

As the unmodified thermoplastic polystyrene-based elastomer, for example, the "TUFTEC" series (for example, H1031, H1041, H1043, H1051, H1052, H1053, H1062, H1082, H1141, H1221, or H1272), manufactured by Asahi Kasei Corporation, SEBS (such as "HYBRAR" 5127, or 5125), and SEPS (such as "SEPTON" 2002, 2063, S2004, or S2006), manufactured by Kuraray Co., Ltd, which are commercial products, may be used.

### Acid-modified Thermoplastic Polystyrene-based Elastomer

"Acid-modified thermoplastic polystyrene-based elastomer" refers to a thermoplastic polystyrene-based elastomer that is acid modified by bonding an unsaturated compound having an acid group such as a carboxylic acid group, a sulfuric acid group, or a phosphoric acid group to an unmodified thermoplastic polystyrene-based elastomer. The acid-modified thermoplastic polystyrene-based elastomer may be obtained by, for example, bonding an unsaturated bond site of an unsaturated carboxylic acid, or an unsaturated carboxylic acid anhydride, to (for example, by graft polymerization) with a thermoplastic polystyrene-based elastomer.

As the (unsaturated) compound having an acid group, a compound having a carboxylic acid group that is a weak acid group is preferable from the viewpoint of suppressing degradation of the thermoplastic polyamide-based elastomer, and examples thereof include acrylic acid, methacrylic acid, itaconic acid, crotonic acid, isocrotonic acid, and maleic acid.

Examples of the acid-modified thermoplastic polystyrene-based elastomer include TUFTEC, manufactured by Asahi Kasei Corporation, such as M1943, M1911, or M1913, and FG19181G, manufactured by Kraton Inc.

The acid value of the acid-modified thermoplastic polystyrene-based elastomer is preferably more than 0 mg (CH₃ONa)/g and 20 mg (CH₃ONa)/g or less, more preferably more than 0 mg (CH₃ONa)/g and 17 mg (CH₃ONa)/g or less, and particularly preferably more than 0 mg (CH₃ONa)/g and 15 mg (CH₃ONa)/g or less.

### Thermoplastic Polyurethane-based Elastomer

Examples of the thermoplastic polyurethane-based elastomer include materials with at least a polyurethane forming the hard segment that forms pseudo-crosslinks by physical aggregation, and another polymer that is amorphous and forms the soft segment with a low glass transition temperature.
The thermoplastic polyurethane-based elastomer is also referred to as simply "TPU"

### (ThermoPlastic Urethane elastomer).

As specific examples of the thermoplastic polyurethane-based elastomer, a copolymer including a soft segment including the unit structure represented by the following Structural Unit (U-1), and a hard segment including the unit structure represented by the following Structural Unit (U-2) may be exemplified.

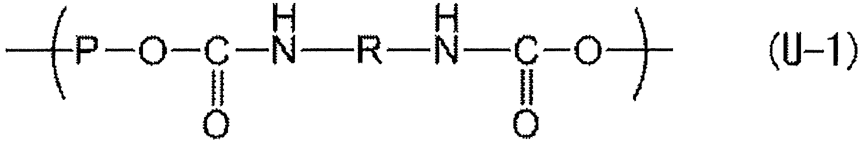

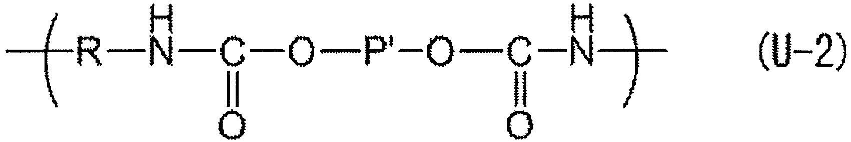

In Structural Unit (U-1) and Structural Unit (U-2), P represents a long-chain aliphatic polyether, or a long-chain aliphatic polyester. R represents an aliphatic hydrocarbon, an alicyclic hydrocarbon, or an aromatic hydrocarbon. P' represents a short-chain aliphatic hydrocarbon, an alicyclic hydrocarbon, or an aromatic hydrocarbon.

In the Structural Unit (U-1), as the long-chain aliphatic polyether or the long-chain aliphatic polyester represented by P, for example, a long-chain aliphatic polyether with a molecular weight of from 500 to 5000 or long-chain aliphatic polyester with a molecular weight of from 500 to 5000 may be employed. P is derived from a diol compound including a long-chain aliphatic polyether, or a long-chain aliphatic polyester, represented by P. Examples of the diol compounds include polyethylene glycols, polypropylene glycols, polytetramethylene ether glycols, poly(butylene adipate) diols, poly-ε-caprolactone diols, poly(hexamethylene carbonate) diols, and ABA-type triblock polyethers (polyethers represented by Formula (3) above), which are within the molecular weight range described above.
These compounds may be employed singly, or in a combination of two or more thereof.

In Structural Unit (U-1), and Structural Unit (U-2), R is derived from a diisocyanate compound including an aliphatic hydrocarbon, an alicyclic hydrocarbon, or an aromatic hydrocarbon represented by R. Examples of aliphatic diisocyanate compounds including an aliphatic hydrocarbon represented by R include 1,2-ethylene diisocyanate, 1,3-propylene diisocyanate, 1,4-butane diisocyanate, and 1,6-hexamethylene diisocyanate.
Examples of diisocyanate compounds including an alicyclic hydrocarbon represented by the R include 1,4-cyclohexane diisocyanate, or 4,4-cyclohexane diisocyanate. Examples of aromatic diisocyanate compounds including the aromatic hydrocarbon represented by R include 4,4'-diphenylmethane diisocyanate, or tolylene diisocyanate.
These compounds may be employed singly, or in a combination of two or more thereof.

In Structural Unit (U-2), as a short-chain aliphatic hydrocarbon, for example, an alicyclic hydrocarbon, or an aromatic hydrocarbon represented by P', a short-chain aliphatic hydrocarbon with a molecular weight of less than 500, an alicyclic hydrocarbon with a molecular weight of less than 500, or an aromatic hydrocarbon with a molecular weight of less than 500 may be employed. P' is derived from a diol compound including a short-chain aliphatic hydrocarbon, alicyclic hydrocarbon, or aromatic hydrocarbon represented by P'. Examples of aliphatic diol compounds including a short-chain aliphatic hydrocarbon represented by P' include glycols, and polyalkylene glycols, with examples thereof including ethylene glycol, propylene glycol, trimethylene glycol, 1,4-butanediol, 1,3-butanediol, 1,5-pentanediol, 1,6-hexanediol, 1,7-heptanediol, 1,8-octanediol, 1,9-nonanediol, and 1,10-decanediol.
Examples of alicyclic diol compounds including an alicyclic hydrocarbon represented by P' include cyclopentane-1,2-diol, cyclohexane-1,2-diol, cyclohexane-1,3-diol, cyclohexane-1,4-diol, and cyclohexane-1,4-dimethanol.
Examples of aromatic diol compounds including an aromatic hydrocarbon represented by P' include hydroquinone, resorcin, chlorohydroquinone, bromohydroquinone, methylhydroquinone, phenylhydroquinone, methoxyhydroquinone, phenoxyhydroquinone, 4,4'-dihydroxybiphenyl, 4,4'-dihydroxydiphenylether, 4,4'-dihydroxydiphenylsulfide, 4,4'-dihydroxydiphenylsulfone, 4,4'-dihydroxybenzophenone, 4,4'-dihydroxydiphenylmethane, bisphenol A, 1,1-di(4-hydroxyphenyl)cyclohexane, 1,2-bis(4-hydroxyphenoxy)ethane, 1,4-dihydroxynaphthalene, and 2,6-dihydroxynaphthalene.
These compounds may be employed singly, or in a combination of two or more thereof.

The number average molecular weight of the polymer (polyurethane) forming the hard segment is preferably from 300 to 1500 from the viewpoint of melting and forming property. The number average molecular weight of the polymer forming the soft segment is preferably from 500 to 20000, more preferably from 500 to 5000, and particularly preferably from 500 to 3000 from the viewpoints of flexibility and thermal stability of the thermoplastic polyurethane-based elastomer. The mass ratio (x:y) of the hard segment (x) to the soft segment (y) is preferably from 15:85 to 90:10, and more preferably from 30:70 to 90:10 from the viewpoint of formability.
The thermoplastic polyurethane-based elastomer may be synthesized by a known method to copolymerize a polymer forming a hard segment, and a polymer forming a soft segment. As the thermoplastic polyurethane, for example, the thermoplastic polyurethane described in JP-A H05-331256 may be employed.
Specifically, as the thermoplastic polyurethane-based elastomer, a combination of a hard segment consisting of an aromatic diol and an aromatic diisocyanate, and a soft segment consisting of a polycarbonate ester is preferable, a tolylene diisocyanate (TDI)/polyester-based polyol copolymer, a TDI/polyether-based polyol copolymer, a TDI/caprolactone-based polyol copolymer, a TDI/polycarbonate-based polyol copolymer, a 4,4'-diphenylmethane diisocyanate (MDI)/polyester-based polyol copolymer, an MDI/polyether-based polyol copolymer, an MDI/caprolactone-based polyol copolymer, an MDI/polycarbonate-based polyol copolymer, or an MDI + hydroquinone/polyhexamethylene carbonate copolymer are preferable, and a TDI/polyester-based polyol copolymer, a TDI/polyether-based polyol copolymer, an MDI/polyester polyol copolymer, an MDI/polyether-based polyol copolymer, or an MDI+hydroquinone /polyhexamethylene carbonate copolymer are more preferable.

As the thermoplastic polyurethane-based elastomer, for example, the "ELASTOLLAN" series (examples include ET680, ET880, ET690, and ET890), manufactured by BASF SE, the "KURAMIRON U" series (for example, 2000 series, 3000 series, 8000 series, and 9000 series), manufactured by Kuraray Co., Ltd., and the "MIRACTRAN" series (for example, XN-2001, XN-2004, P390RSUP, P480RSUI, P26MRNAT, E490, E590, and P890), manufactured by Nippon Miractran Co., Ltd., which are commercial products, may be employed.

The above thermoplastic elastomers may be synthesized by a known method to copolymerize a polymer forming a hard segment, and a polymer forming a soft segment.

Explanation follows regarding various non-elastomer thermoplastic resins. Non-elastomer Thermoplastic Polyolefin-based Resin
The non-elastomer polyolefin-based resin is a polyolefin-based resin with a higher elastic modulus than the thermoplastic polyolefin-based elastomers described above.
Examples of the non-elastomer thermoplastic polyolefin-based resin include homopolymers, random copolymers, and block copolymers of α-olefins such as propylene, or ethylene, and of annular olefins such as cycloolefins. Specific examples thereof include thermoplastic polyethylene-based resins, thermoplastic polypropylene-based resins, and thermoplastic polybutadiene-based resins, and thermoplastic polypropylene-based resins in particular are preferable from the viewpoints of heat resistance, and workability.
Specific examples of the non-elastomer thermoplastic polypropylene-based resin include propylene homopolymers, propylene-α-olefin random copolymers, and propylene-α-olefin block copolymers. Examples of such α-olefins include α-olefins having approximately from 3 to 20 carbon atoms, such as propylene, 1-butene, 1-pentene, 3-methyl-1-butene, 1-hexene, 4-methyl-1-pentene, 3-methyl-1-pentene, 1-heptene, 1-octene, 1-decene, 1-dodecene, 1-tetradecene, 1-hexadecene, 1-octadecene, and 1-eicosene.

The thermoplastic polyolefin-based resin may be a chlorinated polyolefin-based resin in which some or all of the hydrogen atoms in the molecule are substituted by chlorine atoms. Examples of the chlorinated polyolefin-based resin include chlorinated polyethylene-based resins.

### Non-elastomer Thermoplastic Polystyrene-based Resin

The non-elastomer thermoplastic polystyrene-based resin is a thermoplastic polystyrene-based resin with a higher elastic modulus than the thermoplastic polystyrene-based elastomers described above.
As the thermoplastic polystyrene-based resin, for example, a product obtained by a known radical polymerization method or ionic polymerization method is preferably used with examples thereof including polystyrene having an anionic living polymer. Examples of the thermoplastic polystyrene-based resin include polymers including styrene molecular skeletons, and copolymers of styrene and acrylonitrile.
Of these, acrylonitrile/butadiene/styrene copolymers, hydrogenated products thereof, blends of acrylonitrile/styrene copolymers and polybutadiene, and hydrogenated products thereof are preferable. Specific examples of the thermoplastic polystyrene-based resin include polystyrenes (known as PS resins), acrylonitrile/styrene resins (known as AS resins), acrylic-styrene-acrylonitrile resins (known as ASA resins), acrylonitrile/butadiene/styrene resins (known as ABS resins (including blended-forms and copolymer-forms)), hydrogenated products of ABS resins (known as AES resins), and acrylonitrile-chlorinated polyethylene-styrene copolymers (known as ACS resins).

As stated above, AS resins are acrylonitrile/styrene resins, and are copolymers with styrene and acrylonitrile as the main components. These may be further copolymerized with, for example, aromatic vinyl compounds such as α-methylstyrene, vinyltoluene, or divinylbenzene, cyanated vinyl compounds such as dimethacrylonitrile, alkylesters of (meth)acrylic acid such as methyl methacrylate, ethyl methacrylate, n-butyl methacrylate, methyl acrylate, ethyl acrylate, n-butyl acrylate, or stearyl acrylate, maleimide-based monomers such as maleimide, N-methylmaleimide, N-ethylmaleimide, N-phenylmaleimide, or N-cyclohexylmaleimide, diene compounds, dialkylesters of maleic acid, allyl alkyl ethers, unsaturated amino compounds, and vinyl alkyl ethers.

For the AS resin, products of further graft polymerizing, or copolymerizing the AS resin with an unsaturated monocarboxylic acid, an unsaturated dicarboxylic acid, an unsaturated fatty acid anhydride, or a vinyl-based monomer having an epoxy group are preferable, and products of further graft polymerizing, or copolymerizing the AS resin with an unsaturated fatty acid anhydride, or a vinyl-based monomer having an epoxy group are more preferable.

Such vinyl-based monomers having an epoxy group are compounds having both a radically polymerizable vinyl group and an epoxy group in a molecule thereof. Specific examples thereof include glycidyl esters of unsaturated organic acids such as glycidyl acrylate, glycidyl methacrylate, glycidyl ethacrylate, or glycidyl itaconate, glycidyl ethers such as allyl glycidyl ether, and derivatives of these such as 2-methyl glycidyl methacrylate. Of these, glycidyl acrylate, and glycidyl methacrylate may be preferably employed. Moreover, these compounds may be employed singly, or in a combination of two or more thereof.

Unsaturated fatty acid anhydrides are compounds having both a radically polymerizable vinyl group and an acid anhydride in a molecule thereof. Preferable specific examples thereof include maleic acid anhydride.

ASA resins are formed from an acrylate monomer, a styrene monomer, and an acrylonitrile monomer, and that have rubbery properties and thermoplasticity.

Examples of the ABS resin include resins produced by graft polymerizing an olefin-based rubber (such as polybutadiene rubber) to an acrylonitrile-styrene-based resin at approximately 40% by mass or less. Examples of the AES resin include resins produced by graft polymerizing an ethylene-propylene copolymer rubber (such as EP rubber) to an acrylonitrile-styrene-based resin at approximately 40% by mass or less.

### Non-elastomer Thermoplastic Polyamide-based Resin

The non-elastomer polyamide-based resin is a polyamide-based resin with a higher elastic modulus than the thermoplastic polyamide-based elastomer described above.
Examples of the thermoplastic polyamide-based resin include polyamides that form the hard segment of the thermoplastic polyamide-based elastomers described above. Examples of the thermoplastic polyamide-based resin include polyamides that are ring-opened polycondensates of ε-caprolactam (amide 6), polyamides that are ring-opened polycondensates of undecane lactam (amide 11), polyamides that are ring-opened condensates of lauryl lactam (amide 12), polyamides that are condensates of a diamine and a dibasic acid (amide 66), and polyamides having meta-xylene diamine as a structural unit (amide MX).

The amide 6 may be represented by, for example, {CO-(CH₂)₅-NH}ₙ (where n represents the number of repeating units).
The amide 11 may be represented by, for example, {CO-(CH₂)₁₀-NH}ₙ (where n represents the number of repeating units).
The amide 12 may be represented by, for example, {CO-(CH₂)₁₁-NH}ₙ (where n represents the number of repeating units).
The amide 66 may be represented by, for example, {CO(CH₂)₄CONH(CH₂)₆NH}ₙ (where n represents the number of repeating units).

The amide MX having meta-xylene diamine as a structural unit may be represented, for example, the structural unit (A-1) below (where n in (A-1) represents the number of repeating monomer units).

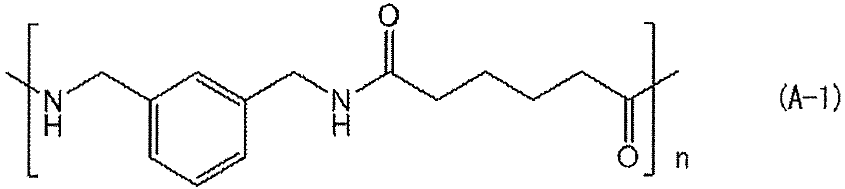

The thermoplastic polyamide-based resin may be a homopolymer formed from only the structural unit, or may be a copolymer of the structural unit (A-1) and another monomer. In the case of a copolymer, the content ratio of the structural unit (A-1) in each thermoplastic polyamide-based resin is preferably 60% by mass or above.

The number average molecular weight of the thermoplastic polyamide-based resin is preferably from 300 to 30000. The number average molecular weight of the polymer forming the soft segment is preferably from 200 to 20000 from the viewpoint of toughness and flexibility at low temperature.

A commercial product may be employed as the non-elastomer polyamide-based resin.
As the amide 6, for example, a commercial product such as "UBE Nylon" 1022B or 1011FB, manufactured by Ube Industries, Ltd., may be used.
As the amide 12, for example, "UBE Nylon" 3024U, manufactured by Ube Industries, Ltd., may be used. As the amide 66, for example "UBE Nylon" may be used. Moreover, as the amide MX, for example, a commercial product, such as MX Nylon (S6001, S6021, or S6011), manufactured by Mitsubishi Gas Chemical Company, Inc., may be used.

### Non-elastomer Thermoplastic Polyester-based Resin

The non-elastomer polyester-based resin is a resin, having ester bonds in the main chain thereof, with a higher elastic modulus than the thermoplastic polyester-based elastomers described above.
Although the thermoplastic polyester-based resin is not particularly limited, it is preferably the same type of resin as the thermoplastic polyester-based resin included in the hard segment in the thermoplastic polyester-based elastomers described above. The non-elastomer polyester-based resin may be crystalline, or amorphous, and examples thereof include aliphatic-type polyesters, and aromatic polyesters. The aliphatic-type polyester may be a saturated aliphatic-based polyester, or an unsaturated aliphatic-type polyester.

Aromatic polyesters are generally crystalline, and may be formed from, for example, an aromatic dicarboxylic acid or an ester forming derivative thereof, and an aliphatic diol. Examples of the aromatic polyester include polyethylene terephthalate, polybutylene terephthalate, polystyrene terephthalate, polyethylene naphthalate, and polybutylene naphthalate, with polybutylene terephthalate being preferable.

As one of examples of the aromatic polyester, polybutylene terephthalate derived from terephthalic acid, and/or dimethylterephthalate, and 1,4-butanediol may be exemplified. Moreover, the aromatic polyester may be a polyester derived from: a dicarboxylic acid component such as isophthalic acid, phthalic acid, naphthalene-2,6-dicarboxylic acid, naphthalene-2,7-dicarboxylic acid, diphenyl-4,4'-dicarboxylic acid, diphenoxyethane dicarboxylic acid, 5-sulfoisophthalic acid, or ester forming derivatives thereof; and a diol with a molecular weight of 300 or less (for example, an aliphatic diol such as ethylene glycol, trimethylene glycol, pentamethylene glycol, hexamethylene glycol, neopentylglycol, or decamethylene glycol, an alicyclic diol such as 1,4-cyclohexane dimethanol, or tricyclodecane dimethylol, or an aromatic diol such as xylylene glycol, bis(p-hydroxy)diphenyl, bis(p-hydroxyphenyl)propane, 2,2-bis[4-(2-hydroxyethoxy)phenyl]propane, bis[4-(2-hydroxy)phenyl]sulfone, 1,1-bis[4-(2-hydroxyethoxy)phenyl]cyclohexane, 4,4'-dihydroxy-p-terphenyl, or 4,4'-dihydroxy-p-quaterphenyl) or the like, or a copolymer polyester that uses two or more of these dicarboxylic acid components, or two or more of these diol components, in a combination. Copolymerization can also be made with a polyfunctional carboxylic acid component having three or more functional groups, a polyfunctional oxyacid component, or a polyfunctional hydroxy component and the like, in a range of 5% by mol or less.

As the non-elastomer thermoplastic polyester-based resin, a commercial product may be used, with examples including the "DURANEX" series (examples including 2000, and 2002), manufactured by Polyplastics Co., Ltd., the NOVADURAN series (examples include 5010R5, and 5010R3-2), manufactured by Mitsubishi Engineering-Plastics Corporation, and the "TORAYCON" series (examples include 1401X06, and 1401X31), manufactured by Toray Industries, Inc.

As the aliphatic polyester, any of a dicarboxylic acid/diol condensate, or a hydroxycarboxylic acid condensate may be used. Examples thereof include polylactic acid, polyhydroxy-3-butylbutyrate, polyhydroxy-3-hexylbutyrate, poly(ε-caprolactone), polyenantholactone, polycaprylolactone, polybutylene adipate, and polyethylene adipate. Polylactic acid is a representative resin used as a biodegradable plastic, and preferable embodiments of polylactic acid are described below.

### Dynamically Crosslinking-type Thermoplastic Elastomer

A dynamically crosslinking-type thermoplastic elastomer may be used as the resin material. Dynamically crosslinking-type thermoplastic elastomers refers to thermoplastic elastomers produced by mixing rubber with molten-state thermoplastic resin, and then adding a crosslinking agent and to perform a crosslinking reaction of rubber components under condition of kneading.
The dynamically crosslinking-type thermoplastic elastomer is also referred to below simply as "TPV" (ThermoPlastic Vulcanizate Elastomer).

Examples of thermoplastic resins that can be used in the manufacture of the TPV include the thermoplastic resins described above (including the thermoplastic elastomers).
Examples of rubber components that can be used in the manufacture of the TPV include diene-based rubbers, and hydrogenated products thereof (for example, NR, IR, epoxied natural rubbers, SBR, BR (high-cis BR, and low-cis BR), NBR, hydrogenated NBR, and hydrogenated SBR), olefin-based rubbers (for example, an ethylene propylene rubber (EPDM, EPM), a maleic acid-modified ethylene propylene rubber (M-EPM), IIR, a copolymer of isobutylene and an aromatic vinyl or a diene-based monomer, acrylic rubber (ACM), or an ionomer), halogen-containing rubbers (for example, Br-IIR, C1-IIR, a bromide of an isobutylene para-methylstyrene copolymer (Br-IPMS), chloroprene rubber (CR), hydrin rubber (CHR), chlorosulfonated polyethylene (CSM), chlorinated polyethylene (CM), or maleic acid-modified chlorinated polyethylene (M-CM)), silicone rubbers (for example, methyl vinyl silicone rubber, dimethyl silicone rubber, or methyl phenyl vinyl silicone rubber), sulfur-containing rubbers (for example, a polysulfide rubber), fluorine rubbers (for example, vinylidene fluoride-based rubbers, fluorine-containing vinylether-based rubbers, tetrafluoroethylene-propylene-based rubbers, fluorine-containing silicone-based rubbers, and fluorine-containing phosphazene-based rubbers); in particular, as modified polyisobutylene-based rubbers, halogen-containing copolymer rubbers of an isomonoolefin and a p-alkylstyrene such as isobutylene-isoprene copolymer rubbers with introduced halogen groups, and/or isobutylene-paramethylstyrene copolymer rubbers with introduced halogen groups are effectively used. "Exxpro", manufactured by ExxonMobil, may be suitably employed as the latter.

Various additives, such as rubbers, various fillers (for example, silica, calcium carbonate, or clays), antioxidants, oils, plasticizers, coloring agents, weather proofing agents, or reinforcing materials, may be included in the resin material. The content of the additives in the resin material (tire frame) is not particularly limited, and may be used as is appropriate within a range that does not impair the advantageous effects of the invention. In cases in which components other than resin, such as additives, are added to the resin material, the content of the resin component in the resin material is preferably 50% by mass or greater, and is more preferably 90% by mass or greater, with respect to the total amount of resin material. The content of the resin component in the resin material corresponds to the remaining portion after subtracting the total content of each additive from the total amount of the resin component.

### Physical Characteristics of Resin Material

Explanation next follows regarding preferable physical characteristics of the resin material included in the tire frame.

In the tire frame of the invention, a resin material with a bending elastic modulus of from 100 MPa to 1000 MPa is used. The bending elastic modulus of the tire frame is also preferably from 100 MPa to 1000 MPa, and is more preferably from 100 MPa to 700 MPa. The bending elastic modulus of the tire frame can be measured by employing a test piece cut from the tire frame. The bending elastic modulus measurement method and size of the test piece are the same as in the case of the resin material, as described above. The bending elastic moduli of at least a crown portion and side portions of the tire frame are each preferably in a range of from 100 MPa to 1000 MPa, and more preferably from 100 MPa to 700 MPa. The bending elastic modulus of the side portions of the tire frame, in particular, imparts a large influence on ride comfort. The larger the bending deformation occurring in the side portions at contact with the road surface during the tire-travelling, the greater the amount of heat generated inside the tire, with a tendency to increase rolling resistance. On the other hand, the smaller the bending deformation of the side portions at contact with the road surface during the tire-travelling, the lower the rolling resistance tends to be. However, there is also a tendency for the ride comfort to deteriorate when the bending deformation is small. Thus, in order to form a tire with good ride comfort and low rolling, it is preferable to suppress the bending elastic modulus to within an appropriate range, while suppressing bending deformation of the side portions during contact with the road surface.

Accordingly, in cases in which the bending elastic modulus of at least the side portions is within the above range, an improvement in ride comfort is effectively exhibited, and so is preferable. The bending elastic modulus of the side portions of the tire frame refers to the bending elastic modulus obtained from a test piece in the side portion of the tire, which is centered on a location of the tire frame at the maximum width in the tire width direction. The bending elastic modulus of the tire crown portion refers to the bending elastic modulus obtained from a test piece, which is centered on a location at the tire width direction center of the tire frame. The bending elastic modulus of the tire frame may be similar in the crown portion and the side portions, or may differ, as desired. For example, in cases in which the bending elastic modulus differs at different potions of the tire frame, the bending elastic modulus of the tire frame at each potion may be adjusted by, for example, by adjusting the thickness with employing the same type of resin material for the crown portion and the side portions of the tire frame, , or the bending elastic modulus at each portion may be adjusted by employing different resin material for the material at the crown portion and the side portions of the tire frame.

In such cases, the thickness of the crown portion of the tire frame may be appropriately selected to adjust the bending elastic modulus; however, in consideration of the tire weight and the like, the thickness is preferably from 0.5 mm to 10 mm, more preferably from 1 mm to 5 mm, and particularly preferably from 1 mm to 4 mm. Similarly, the thickness of the side portions of the tire frame is more preferably from 0.5 mm to 10 mm, and particularly preferably from 1 mm to 5 mm. The thickness of the crown portion and the side portions of the tire frame may be taken with reference to the average thickness of test pieces during bending elastic modulus measurement. The thickness of the tire frame may be appropriately measured using known methods and devices.

### Explanation follows regarding the crown portion and the side portions of the tire frame.

The melting point of the resin material (tire frame) itself (or the softening point) is normally from 100°C to 350°C, and is preferably approximately from 100°C to 250°C, and from the viewpoint of tire manufacturability, is preferably approximately from 120°C to 250°C, and more preferably from 120°C to 200°C.
By employing resin material with a melting point from 120°C to 250°C, sufficient adhesion strength is achieved between the tire frame pieces even for a frame welded in a surrounding temperature range of from 120°C to 250°C, when, for example, the tire frame is formed by welding together divided parts(frame pieces), The tire of the invention accordingly has excellent durability during travelling, such as puncture resistance performance, abrasion resistance and the like. The heating temperature is preferably a temperature from 10°C to 150°C higher, and more preferably a temperature from 10°C to 100°C higher, than the melting point (or softening point) of the resin material forming the tire framepieces.

The resin material may be obtained by adding various additives, if necessary, and appropriate mixing with a known method (for example, melt mixing).

### Resin material obtained by melt mixing may be employed in pellet form, if necessary.

The tensile elastic modulus, as defined by JIS K7113:1995, of the resin material (tire frame) itself, is preferably from 100 MPa to 1000 MPa, is more preferably from 100 MPa to 800 MPa, and is particularly preferably from 100 MPa to 700 MPa. In cases where the tensile elastic modulus of the resin material is from 100 MPa to 700 MPa, efficient rim fitting can be performed while maintaining the shape of the tire frame.

The tensile yield strength, as defined by JIS K7113:1995, of the resin material (tire frame) itself is preferably 5 MPa or more, is preferably from 5 MPa to 20 MPa, and is more preferably from 5 MPa to 17 MPa. In cases where the tensile yield strength of the resin material is 5 MPa or more, the tire can bear deformation by the loads imparted to the tire during travelling and the like.

The tensile yield elongation, as defined by JIS K7113:1995, of the resin material (tire frame) itself, is preferably 10% or more, is preferably from 10% to 70%, and is more preferably from 15% to 60%. In cases where the tensile yield elongation of the resin material is 10% or more, a large elastic region and good fittability onto a rim are achieved.

The tensile breaking elongation, as defined by JIS K7113:1995, of the resin material (tire frame) itself is preferably 50% or more, is preferably 100% or more, is more preferably 150% or more, and is particularly preferably 200% or more. In cases where the tensile breaking elongation of the resin material is 50% or more, good fittability onto a rim is achieved, and the tire is hardly broken by impact damage.

The deflection temperature under load (under 0.45 MPa load), as defined by ISO75-2 or ASTM D648, of the resin material (tire frame) itself, is preferably 50°C or more, is preferably from 50°C to 150°C, and is more preferably from 50°C to 130°C. In cases where the deflection temperature under load of the resin material is 50°C or more, deformation of the tire frame is suppressed even in cases in which vulcanization is performed during manufacture of the tire.

### First Embodiment

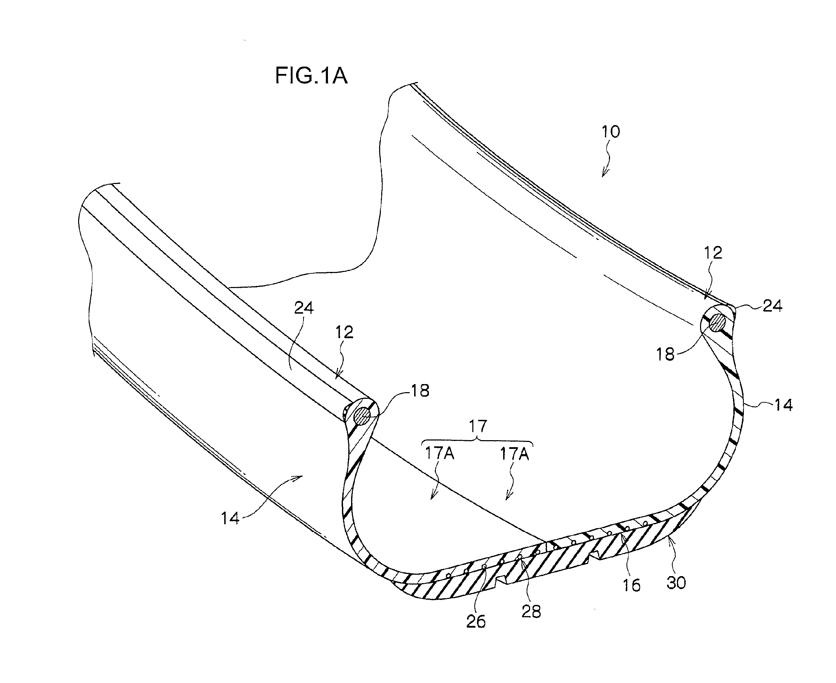

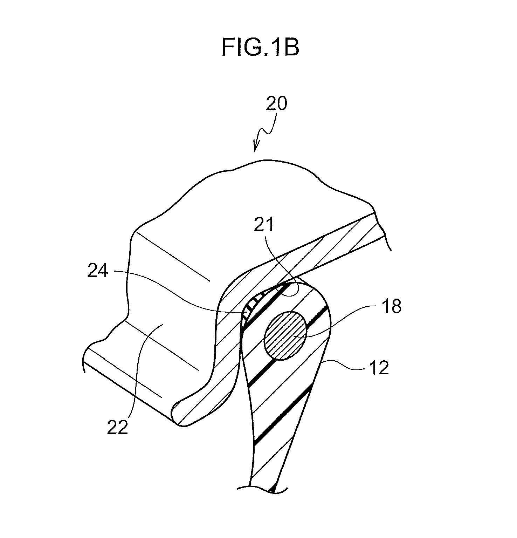

Explanation next follows regarding a tire according to a first embodiment of the tire of the invention, with reference to the drawings.
Explanation follows regarding a tire 10 of the present embodiment. Fig. 1A is a perspective view illustrating a cross-section of a portion of the tire according to the first embodiment of the invention. Fig. 1B is a cross-section of a bead portion fitted to a rim. As illustrated in Fig. 1, the tire 10 of the present embodiment exhibits a cross-section profile that is substantially the same as an ordinary conventional rubber-made pneumatic tire.

As illustrated in Fig. 1A, the tire 10 is equipped with a tire case 17 configured including a pair of bead portions 12 that each make contact with a bead seat 21 and a rim flange 22 of the rim 20 illustrated in Fig. 1B, side portions 14 that respectively extend from the bead portions 12 toward the tire radial direction outside, and a crown portion 16 (outer peripheral portion) that connects together the tire radial direction outside end of one side portion 14 and the tire radial direction outside end of the other side portion 14. Namely, in the present specification, "side portion" refers to the regions (locations) in the tire case 17 from the bead portions 12 to the locations on the tire case 17 where the tire width direction ends of a crown 30 are positioned. The "crown portion" refers to the locations that connect the tire radial direction outside end of the one side portion 14 to the tire radial direction outside end of the other side portion 14, and refers to the region (locations) including at least the tire frame tire width direction center.

The tire case 17 of the present embodiment is formed from a resin material including a single thermoplastic polyester-based resin (for example "HYTREL 5557", manufactured by Du Pont-Toray Co., Ltd.) as the resin material. The bending elastic modulus of the resin material is 192.995 MPa, and the bending elastic modulus of the side portion 14 and the crown portion 16 of the tire case 17 are both 192.995 MPa (side portion 14 thickness: 3.0 mm; crown portion 16 thickness: 3.0 mm).

The tire case 17 in the present embodiment is formed with a single resin material (the thermoplastic polyester-based resin); however, the invention is not limited to such a configuration, and similarly to ordinary conventional rubber-made pneumatic tires, thermoplastic resin materials with different characteristics may be employed for each of the portions of the tire case 17 (such as the side portions 14, the crown portion 16 and the bead portions 12). The tire case 17 may be reinforced by a reinforcement material by embedding the reinforcement material (such as fibers, cord, nonwoven fabric, or cloth of a polymer material or metal) in the tire case 17 (for example, in the bead portions 12, the side portions 14, the crown portion 16, and the like).

In the tire case 17 of the present embodiment, a pair of tire case halves (tire frame pieces) 17A formed from a resin material are joined together. The tire case halves 17A are each formed as a single body of one the bead portions 12, one of the side portions 14, and half the width of the crown portion 16, by injection molding or the like, to give tire case halves 17A of the same circular ring shape that are then aligned and joined together at tire equatorial plane portions. The tire case 17 is not limited to being formed by joining two members, and may be formed by joining three or more members.

The tire case halves 17A formed with the resin material may, for example, be formed by vacuum molding, pressure molding, injection molding, melt casting, or the like. The need to perform vulcanization is therefore eliminated in contrast to conventional cases in which a tire case is formed from rubber, enabling tire manufacturing processes to be greatly simplified, and enabling molding time to be reduced.
In the present embodiment, the tire case halves 17A are formed in left-right symmetrical shapes, namely one of the tire case halves 17A is formed in the same shape as the other of the tire case halves 17A, with the advantage that one type of mold suffices for forming the tire case halves 17A.

In the present embodiment, as illustrated in Fig. 1B, a circular ring shaped bead core 18, formed from steel cord, is embedded in the bead portions 12, similarly to in ordinary conventional pneumatic tires. However, the invention is not limited to such a configuration, and the bead core 18 may be omitted as long as the rigidity of the bead portions 12 is secured, and there are no issues with fitting to the rim 20. Other than steel cord, the bead core 18 may also be formed from, for example, organic fiber cord, organic fiber cord covered in a resin, or a hard resin.

In the present embodiment, a seal layer 24, that is formed in a circular ring shape from a material with more excellent sealing properties than the resin material forming the tire case 17, for example rubber, is formed at portions of the bead portions 12 that contact the rim 20, and at least at portions that contact the rim flanges 22 of the rim 20. The seal layer 24 may also be formed to portions where the tire case 17 (the bead portions 12) and the bead seats 21 contact each other. A softer material than the resin material forming the tire case 17 may be employed as the material with more excellent sealing properties than the resin material forming the tire case 17. As a rubber capable of being employed as the seal layer 24, preferably the same type of rubber is employed as the rubber employed on bead portion external faces of ordinary conventional rubber-made pneumatic tires. The rubber seal layer 24 may also be omitted as long as sealing properties with the rim 20 can be secured with the resin material forming the tire case 17 alone, or another thermoplastic resin (thermoplastic elastomer) with more excellent sealing properties than the resin material may also be employed. Examples of such other thermoplastic resins include resins such as polyurethane-based resins, polyolefin-based resins, thermoplastic polystyrene-based resins, polyester resins, and blends of the resin and a rubber or elastomer, or the like. A thermoplastic elastomer may also be employed, and examples thereof include thermoplastic polyester-based elastomers, thermoplastic polyurethane-based elastomers, thermoplastic polystyrene-based elastomers, thermoplastic polyolefin-based elastomers, blends of a combination of such elastomers with each other, or with rubber, and the like.

As illustrated in Fig. 1A, a reinforcement cord 26 having higher rigidity than the resin material forming the tire case 17 is wound onto the crown portion 16 in the tire case 17 circumferential direction. The reinforcement cord 26 is wound in a spiral shape, such that at least a portion thereof is embedded in the crown portion 16 in cross-section taken along the tire case 17 axial direction, to form a reinforcement cord layer 28. The crown 30, formed from a material, for example rubber, having more excellent abrasion resistance than the resin material forming the tire case 17, is disposed to the tire radial direction outer peripheral side of the reinforcement cord layer 28.

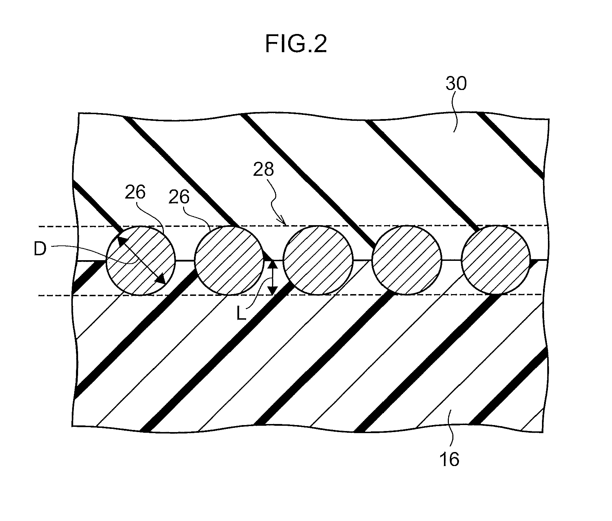

Explanation follows regarding the reinforcement cord layer 28 formed by the reinforcement cord 26, with reference to Fig. 2. Fig. 2 is a cross-section taken along the tire rotation axis and illustrating a state in which reinforcement cord is embedded in the crown portion of a tire case of a tire of the first embodiment. As illustrated in Fig. 2, the reinforcement cord 26 is wound in a spiral shape such that, in cross-section taken along the tire case 17 axial direction, at least a portion is embedded in the crown portion 16, to form, together with a portion of the outer peripheral portion of the tire case 17, a reinforcement cord layer 28 which is illustrated by the intermittent line portion in Fig. 2. The portion of the reinforcement cord 26 embedded in the crown portion 16 is in a closely adhered state with the resin material forming the crown portion 16 (the tire case 17). As the reinforcement cord 26, a monofilament (single strand) such as of metal fiber or organic fiber, or a multifilament (twisted strands) formed from twisted fibers such as a steel cord formed from twisted steel fiber, or the like may be employed. In the present embodiment, a steel cord is employed as the reinforcement cord 26.

The embedded amount L in Fig. 2 illustrates an embedded amount of the reinforcement cord 26 with respect to the tire case 17 (the crown portion 16) along the tire rotation axis direction. The embedded amount L of the reinforcement cord 26 with respect to the crown portion 16 is preferably 1/5 of the diameter D of the reinforcement cord 26, or more, and more preferably exceeds 1/2 thereof. It is most preferable for the whole of the reinforcement cord 26 to be embedded in the crown portion 16. From a size of the reinforcement cord 26, when the embedded amount L of the reinforcement cord 26 exceeds 1/2 the diameter D, the reinforcement cord 26 is difficult to come away from the embedded portion. When the whole of the reinforcement cord 26 is embedded in the crown portion 16, a flat surface (outer peripheral face) is provided, and entrapping air at the reinforcement cord peripheral portion of the reinforcement cord is suppressed even when a member is placed on the crown portion 16 embedded with the reinforcement cord 26. The reinforcement cord layer 28 corresponds to a belt disposed on the outer peripheral face of a carcass of an ordinary conventional rubber-made pneumatic tire.

As described above, the crown 30 is disposed at the tire radial direction outer peripheral side of the reinforcement cord layer 28. The rubber employed in the crown 30 is preferably a similar type of rubber to the rubber employed in a conventional rubber-made pneumatic tire. In place of the crown 30, a crown formed from another type of resin material with more excellent abrasion resistance than the resin material forming the tire case 17 may be employed. The crown 30 is formed with a crown pattern formed from plural grooves in the road contact face, similarly to in a conventional rubber-made pneumatic tire. Explanation follows regarding a manufacturing method of a tire according to the present embodiment.

### Tire Case Molding Process

First, tire case halves supported by a thin metal support ring are aligned facing each other. A jointing mold, not illustrated in the drawings, is placed such that outer peripheral faces of the abutting portions of the tire case halves make contact. The jointing mold is configured to press the periphery of the joining portion (the abutting portion) of the tire case halves 17A with a specific pressure. Then the periphery of the joining portion of the tire case halves is pressed at the temperature of the melting point (or softening point) of the resin material forming the tire case or higher. The joining portion of the tire case halves is heated and pressed by the jointing mold, melting the joining portion, welding the tire case halves together, and forming these members into a single body of the tire case 17. Although in the present embodiment the joining portion of the tire case halves is heated by using the jointing mold, the invention is not limited thereto, and, for example, the joining portions may be heated by a separately provided radio frequency heater, or the like, or may be pre-softened or melted by using hot air, irradiation with infrared radiation, or the like, and then pressed to be joined together by the jointing mold.

### Reinforcement Cord Member Winding Process

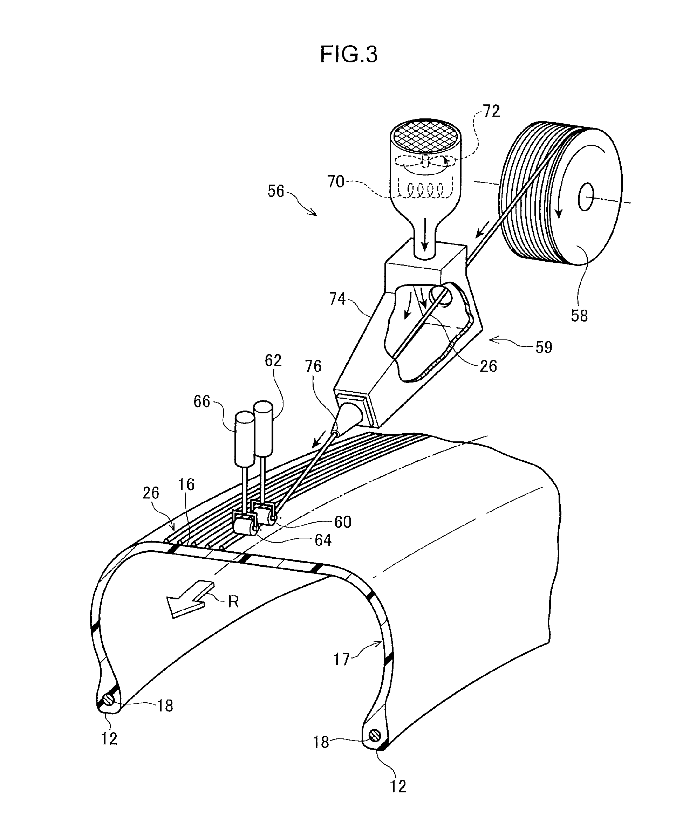

Explanation next follows regarding a reinforcement cord winding process, with reference to Fig. 3. Fig. 3 is an explanatory diagram to explain an operation to embed the reinforcement cord in the crown portion of a tire case using a cord heating device and rollers. In Fig. 3, a cord supply device 56 is equipped with: a reel 58 wound with reinforcement cord 26; a cord heating device 59 disposed at the cord conveying direction downstream side of the reel 58; a first roller 60 disposed at the reinforcement cord 26 conveying direction downstream side; a first cylinder device 62 to move the first roller 60 in a direction towards, or away from, the tire outer peripheral face; a second roller 64 disposed at the reinforcement cord 26 conveying direction downstream side of the first roller 60; and a second cylinder device 66 to move the second roller 64 in a direction towards, or away from, the tire outer peripheral face. The second roller 64 may employ as a cooling roller made of metal. In the present embodiment, the surface of the first roller 60 or the second roller 64 is coated with a fluororesin (TEFLON (registered trademark) in the present embodiment) to suppress adhering of the melted or softened resin material. In the present embodiment, the cord supply device 56 is configured with the two rollers, the first roller 60 or the second roller 64; however, the invention is not limited to such a configuration, and may be configured with one of the rollers alone (namely, a single roller).

The cord heating device 59 is equipped with a heater 70 and a fan 72 for generating hot air. The cord heating device 59 is also equipped with a heating box 74 that is supplied inside with hot air and through an interior space of which the reinforcement cord 26 passes, and a discharge outlet 76 that dispenses the heated reinforcement cord 26.

In the present process, first, the temperature of the heater 70 is raised in the cord heating device 59, and the surrounding air heated by the heater 70 is formed into an airflow by rotation of the fan 72 and delivered into the heating box 74. The reinforcement cord 26 unwound from the reel 58 is then fed into the heating box 74, of which the internal space has been heated by the hot airflow, and heated (for example, the temperature of the reinforcement cord 26 is heated to approximately 100°C to 200°C). The heated reinforcement cord 26 passes through the discharge outlet 76, and is wound under a constant tension in a spiral shape on the outer peripheral face of the crown portion 16 of the tire case 17 rotating in the arrow R direction in Fig. 3. When the heated reinforcement cord 26 contacts the outer peripheral face of the crown portion 16, the resin material of the contact portion melts or softens, and at least a portion of the heated reinforcement cord 26 is embedded in the outer peripheral face of the crown portion 16. When this is performed, due to the heated reinforcement cord 26 being embedded in the melted or softened resin material, a state is achieved in which there are no gaps between the resin material and the reinforcement cord 26, namely a closely adhered state. Air is thereby suppressed from being incorporated into the portion where the reinforcement cord 26 is embedded. Heating the reinforcement cord 26 to a higher temperature than the melting point (or softening point) of the resin material forming the tire case 17 promotes melting or softening of the resin material at the portion contacted by the reinforcement cord 26. This thereby enables the reinforcement cord 26 to be readily embedded in the outer peripheral face of the crown portion 16, and enables the incorporation of air to be effectively suppressed.

The embedded amount L of the reinforcement cord 26 can be adjusted using the heating temperature of the reinforcement cord 26, the tension acting on the reinforcement cord 26, the pressure of the first roller 60, and the like. In the present embodiment, the embedded amount L of the reinforcement cord 26 is set to be 1/5 of the diameter D of the reinforcement cord 26 or greater. The embedded amount L of the reinforcement cord 26 is more preferably 1/2 the diameter D of the reinforcement cord 26 or more, and most preferably the whole of the reinforcement cord 26 is embedded.

The reinforcement cord layer 28 is formed at the outer peripheral side of the crown portion 16 of the tire case 17 by winding the heated reinforcement cord 26, while embedding it in the outer peripheral face of the crown portion 16.

Then the vulcanized, belt shaped, crown 30 is wound a single turn around the outer peripheral face of the tire case 17, and the crown 30 is adhered to the outer peripheral face of the tire case 17, with a bonding agent or the like. The crown 30 may, for example, employ a pre-cured crown employed in conventional known recycled tires. The present process is similar to the process for adhering a pre-cured crown to the outer peripheral face of a base tire of a recycled tire.

Adhering the seal layers 24, formed from a vulcanized rubber, to the bead portions 12 of the tire case 17 with an adhesive agent or the like thereby completes the tire 10.

### Effects

In the tire 10 of the present embodiment, the tire case 17 is formed by a resin material including a thermoplastic polyester-based resin having a bending elastic modulus in the range of from 100 MPa to 1000 MPa, thereby enabling excellent ride comfort to be exhibited. The tire 10 has a simpler structure than that of a conventional rubber-made tire, and is hence lighter in weight. Thus, the tire 10 of the present embodiment has high abrasion resistance and durability. In particular, the tire 10 includes the side portions 14 with bending elastic modulus in the range of from 100 MPa to 1000 MPa and a thickness of 3 mm, thereby enabling a sufficient improvement in ride comfort to be achieved while retaining lightweight characteristics.

In the tire 10 of the present embodiment, the puncture resistance performance, cut resistance performance, and the circumferential direction rigidity of the tire 10 is improved due to winding the reinforcement cord 26, that has a higher rigidity than the resin material, onto the outer peripheral face of the crown portion 16 of the tire case 17 formed from the resin material, so as to give a spiral shape around the circumferential direction. Raising the circumferential direction rigidity of the tire 10 prevents creep of the tire case 17 formed of the resin material.

Due to at least a portion of the reinforcement cord 26 being embedded in and closely adhered to the resin material in the outer peripheral face of the crown portion 16 of the resin material-formed tire case 17 in a cross-section taken along the axial direction of the tire case 17 (the cross-section illustrated in Fig. 1A), air incorporating is suppressed during manufacture, and the reinforcement cord 26 is suppressed from moving under force input during travelling, or the like. Delamination or the like of the reinforcement cord 26, the tire case 17, or the crown 30 is thereby suppressed from occurring, improving the durability of the tire 10.

In cases in which the reinforcement cord layer 28 is formed including a resin material, the reinforcement cord 26 can be placed in closer contact and better fixed to the tire case 17 due to enabling the difference in hardness between the tire case 17 and the reinforcement cord layer 28 to be reduced compared to the reinforcement cord 26 fixed thereto with cushion rubber. This thereby enables the incorporation of air described above to be effectively prevented, enabling movement of the reinforcement cord member during travelling to be effectively suppressed.
In cases in which the reinforcement cord 26 is steel cord, the reinforcement cord 26 can be easily separated and recovered from the resin material by heating when disposing of the tire, and thus the tire 10 is advantageous from the perspective of recycling characteristics. The loss coefficient (tan δ) of resin material is lower than that of vulcanized rubber, thus enabling the tire rolling characteristics to be improved when the reinforcement cord layer 28 includes a lot of resin material. Moreover, the in-plane shear stiffness of resin material is larger than that of vulcanized rubber, with the advantages of excellent steering stability during tire travelling and abrasion resistance.

As illustrated in Fig. 2, the embedded amount L of the reinforcement cord 26 is 1/5 of the diameter D or more, and so the incorporation of air during manufacture is effectively suppressed, further suppressing the reinforcement cord 26 from moving under input or the like during running.

The crown 30 that contacts the road surface is formed from a rubber material that has greater abrasion resistance than the resin material forming the tire case 17, accordingly improving the abrasion resistance of the tire 10.
The ring shaped bead cores 18 formed from a metal material are embedded in the bead portions 12, and so similarly to with a conventional rubber-made pneumatic tire, the tire case 17, namely the tire 10, is firmly held on the rim 20.

The seal layer 24, formed from a rubber material with better sealing properties than the resin material forming the tire case 17, is provided at the portions of the bead portions 12 that contact the rim 20, and so the sealing properties between the tire 10 and the rim 20 are improved. The leakage of air from inside the tire is accordingly even further suppressed than in cases in which a seal is made between the rim 20 and the resin material forming the tire case 17 alone. The rim fitting properties are therefore improved by providing the seal layer 24.

The above embodiment is configured by heating the reinforcement cord 26, with the surface of the tire case 17 melting or softening at the portions where the heated reinforcement cord 26 makes contact; however, the invention is not limited to such a configuration, and the reinforcement cord 26 may be embedded in the crown portion 16 after using a hot airflow generation device to heat the outer peripheral face of the crown portion 16 where the reinforcement cord 26 is to be embedded, without heating the reinforcement cord 26.

In the first embodiment, the heat source of the cord heating device 59 is a heater and a fan; however, the invention is not limited to such a configuration, and configuration may be made to directly heat the reinforcement cord 26 with radiation heat (such as, for example, by infrared radiation).

The first embodiment is configured such that the portion of the resin material melted or softened where the reinforcement cord 26 is embedded is force-cooled with the metal second roller 64; however, the invention is not limited to such a configuration, and configuration may be made such that a cooling airflow is blown directly onto the portion of the resin material that is melted or softened, thereby force-cooling and solidifying the melted or softened portion of the resin material.

The first embodiment is configured such that the reinforcement cord 26 is heated; however, for example, configuration may be made such that the outer periphery of the reinforcement cord 26 is coated in a resin material that is the same as that of the tire case 17. In such cases, by heating the reinforcement cord 26 together with the covering resin material when winding covered reinforcement cord onto the crown portion 16 of the tire case 17, air incorporation during embedding in the crown portion 16 can be effectively suppressed.

Winding the reinforcement cord 26 in a spiral shape facilitates manufacture; however, other methods, such as reinforcement cord 26 that is discontinuous in the width direction may also be considered.

The tire 10 of the first embodiment is the so-called tubeless tire in which the bead portions 12 are fitted to the rim 20 so as to form an air chamber between the tire 10 and the rim 20; however, the invention is not limited to such a configuration, and may be formed into a complete tube shape.

### Second Embodiment

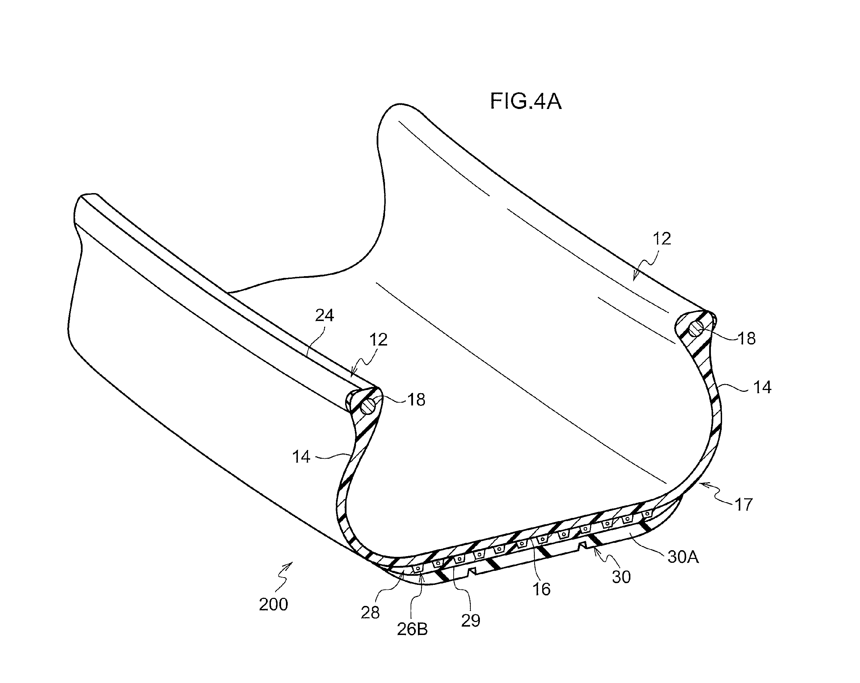

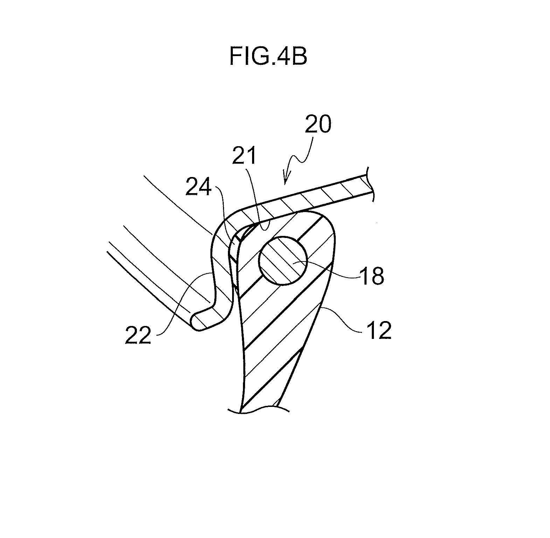

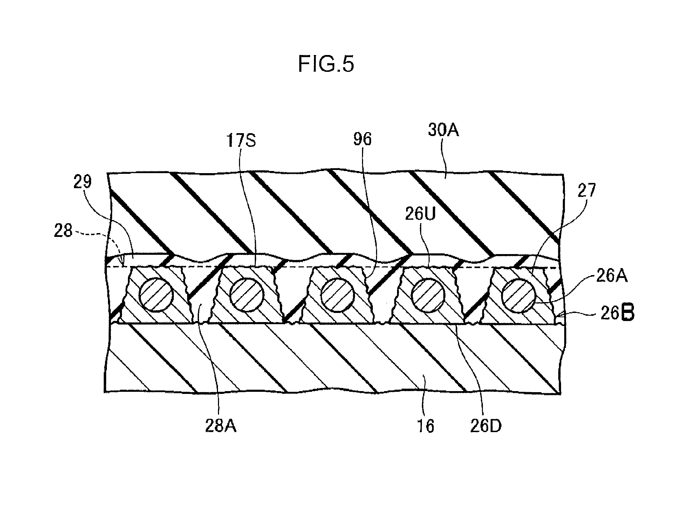

Explanation next follows regarding a manufacturing method of a tire of the invention, and a second embodiment of a tire of the invention, with reference to the drawings. The tire of the present embodiment, similarly to the first embodiment described above, exhibits a cross-section profile that is substantially the same as that of an ordinary conventional rubber-made pneumatic tire. Thus in the following drawings, the same reference numerals are appended to similar configuration to that of the first embodiment. Fig. 4A is a cross-section taken along the tire width direction of the tire of the second embodiment, and Fig. 4B is an enlarged cross-section taken along the tire width direction of a bead portion of a tire of the second embodiment, in a state fitted to a rim. Fig. 5 is a cross-section taken along the tire width direction and illustrates the periphery of a reinforcement layer of a tire according to the second embodiment.

A tire of the second embodiment, similarly to in the first embodiment described above, has a tire case 17 formed using a thermoplastic polyamide-based resin (for example, using a resin material including UBESTA XPA9048X1, manufactured by Ube Industries, Ltd.). The bending elastic modulus of the resin material is 180.505 Mpa, and the bending elastic modulus of the side portions 14 and the crown portion 16 of the tire case 17 is also 180.505 Mpa (side portion 14 thickness: 3.0 mm, crown portion 16 thickness: 3.0 mm).

In a tire 200 of the present embodiment, as illustrated in Fig. 4A and Fig. 5, a reinforcement cord layer 28 (illustrated by the intermittent line in Fig. 5), which is configured by winding a covered cord member 26B around the circumferential direction, is layered onto the crown portion 16. The reinforcement cord layer 28 constitutes an outer peripheral portion of the tire case 17, and reinforces the circumferential direction rigidity of the crown portion 16. The outer peripheral face of the reinforcement cord layer 28 is included in an outer peripheral face 17S of the tire case 17.

The covered cord member 26B is formed by covering a cord member 26A with a covering resin material 27 having higher rigidity than the resin material forming the tire case 17, wherein the covering resin material 27 is a separate body to the resin material forming the tire case 17. The covered cord member 26B and the crown portion 16 are bonded (for example by welding or by adhering with an adhesive) at the joining portion of the covered cord member 26B to the crown portion 16.

The tensile elastic modulus of a covering resin material 27 is preferably set to be within a range of from 0.1 times to 20 times the tensile elastic modulus of the resin material forming the tire case 17. In cases in which the tensile elastic modulus of the covering resin material 27 is 20 times that of the thermoplastic elastomer of the resin material forming the tire case 17 or less, the crown portion is not too hard, and good fittability onto rim is achieved. In cases in which the tensile elastic modulus of the covering resin material 27 is 0.1 times that of the tensile elastic modulus of the resin material forming the tire case 17 or more, the resin forming the reinforcement cord layer 28 is not too soft, the in-plane shear stiffness of the belt is excellent, and cornering force is improved. In the present embodiment, the covering resin material 27 employs the same resin material as the resin material forming the tire frame.

As illustrated in Fig. 5, the covered cord member 26B is formed with a substantially trapezoidal shaped cross-section profile. In the following, the reference numeral 26U indicates the upper face of the covered cord member 26B (the face on the tire radial direction outside), and the reference numeral 26D indicates the bottom face (the face on the tire radial direction inside). In the present embodiment, the cross-section profile of the covered cord member 26B is configured as a substantially trapezoidal shaped cross-section profile; however, the invention is not limited thereto, and any shape may be employed other than a shape in which the width of the cross-section profile increases on progression from the bottom face 26D side (the tire radial direction inside) toward the top face 26U side (the tire radial direction outside).

As illustrated in Fig. 5, the covered cord members 26B are disposed at intervals in the circumferential direction, thus forming gaps 28A between adjacent covered cord members 26B. The outer peripheral face of the reinforcement cord layer 28 is accordingly corrugated, and the outer peripheral face 17S of the tire case 17 configured by the outer peripheral portion of the reinforcement cord layer 28 is also corrugated.

Fine roughened undulations are uniformly formed on the outer peripheral face 17S of the tire case 17 (including the corrugations), and a cushion rubber 29 is bonded thereon with a bonding agent. The rubber portion at the radial direction inside of the cushion rubber 29 flows into the roughened undulations.

The crown 30 that is formed from a material with more excellent abrasion resistance than the resin material forming the tire case 17, for example, rubber, is bonded onto (the outer peripheral face of) the cushion rubber 29.

For the rubber (crown rubber 30A) employed in the crown 30, preferably a similar type of rubber is employed to that employed in conventional rubber-made pneumatic tires.
In place of the crown 30, a crown formed from another type of resin material having more excellent abrasion resistance than the resin material forming the tire case 17 may be employed. A crown pattern (not illustrated in the drawings) of plural grooves is formed in the road surface contact face of the crown 30, similarly to in a conventional rubber-made pneumatic tire.
Explanation next follows regarding a manufacturing method of a tire of the present embodiment.

### Tire Case Molding Process

First, similarly to in the first embodiment described above, the tire case halves 17A are formed, and the tire case 17 is then formed by heating and pressing these with a jointing mold.

### Reinforcement Cord Member Winding Process

Manufacturing equipment for the tire of the present embodiment is similar to that of the first embodiment described above. In the cord supply device 56 illustrated in Fig. 3 of the first embodiment, the substantially trapezoidal cross-section shaped covered cord member 26B, which is obtained by covering the cord member 26A with the covering resin material 27 (the same resin material as that of the tire case in the present embodiment), is wound on the reel 58, and the resultant is employed.

First, the temperature of the heater 70 is raised, and the surrounding air heated by the heater 70 is formed into an airflow by rotation of the fan 72 and delivered into the heating box 74. The covered cord member 26B unwound from the reel 58 is then fed into the heating box 74 of which the internal space has been heated by the hot airflow, and heated (for example, the temperature of the outer peripheral face of the covered cord member 26B is heated to the melting point (or softening point) of the covering resin material 27 or above). The covering resin material 27 is rendered into a melted or softened state by heating the covered cord member 26B.

The covered cord member 26B passes through the discharge outlet 76, and is wound in a spiral shape at a constant tension onto the outer peripheral face of the crown portion 16 of the tire case 17, rotating in the direction towards the nearside of the page. On doing so, the bottom face 26D of the covered cord member 26B contacts the outer peripheral face of the crown portion 16. The covering resin material 27 in the melted or softened state at the portion making contact then spreads out over the outer peripheral face of the crown portion 16, and the covered cord member 26B is welded to the outer peripheral face of the crown portion 16. The joint strength between the crown portion 16 and the covered cord member 26B is thereby raised.

### Roughening Treatment Process

Then, using a blasting apparatus, not illustrated in the drawings, projectile material is ejected at high speed to the outer peripheral face 17S, toward the outer peripheral face 17S of the tire case 17, while rotating the tire case 17. The ejected projectile material impacts the outer peripheral face 17S, and forms finely roughened undulations 96 with an arithmetic roughness average Ra of 0.05 mm or more on the outer peripheral face 17S.
Due to forming the finely roughened undulations 96 on the outer peripheral face 17S of the tire case 17 in this manner, the outer peripheral face 17S becomes hydrophilic, raising the wetting properties of the bonding agent, described below.

### Layering Process

Then a bonding agent is applied onto the outer peripheral face 17S of the tire case 17 that has been subject to roughening treatment.
As the bonding agent, a triazinethiol-based bonding agent, a chlorinated rubber-based bonding agent, a phenol-based resin bonding agent, an isocyanate-based bonding agent, a halogenated rubber-based bonding agent, a rubber-based bonding agent or the like may be employed without particular limitation; however, the bonding agent preferably reacts at a temperature capable of vulcanizing the cushion rubber 29 (from 90°C to 140°C).

One wrap of the non-vulcanized state cushion rubber 29 is then wrapped onto the outer peripheral face 17S applied with the bonding agent, and then a bonding agent, for example, such as a rubber cement composition is applied onto the cushion rubber 29, and one wrap of the crown rubber 30A, in a fully vulcanized or half vulcanized state, is wrapped thereon to give a raw tire case state.

### Vulcanization Process

The raw tire case is then housed in a vulcanization can or mold, and then vulcanized. At this time, the non-vulcanized cushion rubber 29 flows into the roughened undulations 96 formed on the outer peripheral face 17S of the tire case 17 by the roughening processing. When vulcanization is complete, an anchor effect is exhibited by the cushion rubber 29 that has flowed into the roughened undulations 96, raising the joint strength between the tire case 17 and the cushion rubber 29. Namely, the joint strength between the tire case 17 and the crown 30 is raised through the cushion rubber 29.

The seal layer 24, formed from a soft material that is softer than the resin material, is bonded to the bead portions 12 of the tire case 17 using a bonding agent or the like, thereby completing the tire 200.

### Effects

In the tire 200 of the present embodiment, the tire case 17 is formed by a resin material including a thermoplastic polyamide-based resin having a bending elastic modulus in the range of from 100 MPa to 1000 MPa, thereby enabling excellent ride comfort to be exhibited. The tire 200 has a simpler structure than that of a conventional rubber-made tire, and is hence lighter in weight. The tire 200 of the present embodiment accordingly has high abrasion resistance and durability. In particular, the tire 200 includes the side portions 14 with bending elastic modulus in a range of from 100 MPa to 1000 MPa and a thickness of 3.0 mm, thus enabling sufficient improvement in ride comfort to be achieved while retaining lightweight characteristics.

In the manufacturing method of the tire of the present embodiment, when integrating together the tire case 17 with the cushion rubber 29 and the crown rubber 30A, the outer peripheral face 17S of the tire case 17 is roughening treated, raising the bondability (adhesiveness) due to an anchor effect. Due to scuffing the resin material forming the tire case 17 by impacting the projectile material, the wetting properties of the bonding agent are raised. The bonding agent is thereby retained in a uniformly applied state on the outer peripheral face 17S of the tire case 17, enabling the joint strength between the tire case 17 and the cushion rubber 29 to be secured.

In particular, even though corrugations are configured in the outer peripheral face 17S of the tire case 17, roughening treatment is performed to the periphery of the indentations (the indentation walls and indentation bottom) by impacting projectile material into the indentations (the gaps 28A), enabling the joint strength between the tire case 17 and the cushion rubber 29 to be secured.

Moreover, layering the cushion rubber 29 within the region of roughening treatment of the outer peripheral face 17S of the tire case 17 enables the joint strength between the tire case 17 and the cushion rubber to be effectively secured.

In the vulcanization process, when the cushion rubber 29 is vulcanized, the cushion rubber 29 flows into the roughened undulations formed in the outer peripheral face 17S of the tire case 17 by roughening treatment. When the vulcanization is complete, the anchor effect is exhibited by the cushion rubber 29 that has flowed into the roughened undulations, increasing the joint strength between the tire case 17 and the cushion rubber 29.

The tire 200 manufactured by such a tire manufacturing method secures the joint strength between the tire case 17 and the cushion rubber 29, namely, secures the joint strength between the tire case 17 and the crown 30 through the cushion rubber 29. Delamination between the outer peripheral face 17S of the tire case 17 of the tire 200 and the cushion rubber 29, for example during travelling, is accordingly suppressed.

Configuring the reinforcement cord layer 28 on the outer peripheral portion of the tire case 17, thus increases the puncture resistance performance and cut resistance performance in comparison to a configuration with the outer peripheral portion with a configuration other than the reinforcement cord layer 28.

Forming the reinforcement cord layer 28 by winding the covered cord member 26B increases the circumferential direction rigidity of the tire 200. Increasing the circumferential direction rigidity suppresses creep of the tire case 17 (a phenomenon in which there is an increase in plastic deformation of the tire case 17 with time under constant stress), and improves pressure resistance to air pressure from the tire radial direction inside.

Moreover, in cases where the reinforcement cord layer 28 is configured including the covered cord member 26B, the covered cord member 26B can be even more closely adhered and better fixed to the tire case 17 because a difference in hardness between the tire case 17 and the reinforcement cord layer 28 can be smaller than in cases in which the reinforcement cord member 26A is simply fixed with the cushion rubber 29. This thereby enables air incorporation, as described above, to be effectively prevented, enabling movement of the reinforcement cord member during travelling to be effectively suppressed.
In cases in which the reinforcement cord member 26A is steel cord, the cord member 26A can be easily separated and recovered from the covered cord member 26B by heating when disposing of the tire, and thus the tire 200 is advantageous from the perspective of recycling characteristics. The loss coefficient (tan δ) of resin material is also lower than that of vulcanized rubber, thus enabling the tire rolling characteristics to be improved when the reinforcement cord layer 28 includes a lot of resin material. Moreover, the in-plane shear stiffness is larger for resin material than that of vulcanized rubber, with the advantages of excellent steering stability and abrasion resistance during travelling of the tire.

In the present embodiment, corrugations are formed on the outer peripheral face 17S of the tire case 17; however, the invention is not limited thereto, and the outer peripheral face 17S may be formed flat.
In the tire case 17, the reinforcement cord layer may be formed by covering a covered cord member, that has been wound and joined onto the crown portion of a tire case, with a covering thermoplastic material. In such cases, a covering layer may be formed by ejecting the covering thermoplastic material in a melted or softened state onto the reinforcement cord layer 28. Or, without employing an extruder, the covering layer may be formed by heating a welding sheet to a melted or softened state, and then attaching to the surface (outer peripheral face) of the reinforcement cord layer 28.

The second embodiment described above is composed of the tire case 17 formed by joining case section bodies (the tire case halves 17A); however, the invention is not limited thereto, and the tire case 17 may be integrally formed, by using a mold or the like.

In the tire 200 of the second embodiment, the bead portions 12 are fitted to the rim 20 so as to form an air chamber between the tire 200 and the rim 20, which is the so-called tubeless tire; however, the invention is not limited thereto, and the tire 200 may for example be formed into a complete tube shape.

In the second embodiment, the cushion rubber 29 is disposed between the tire case 17 and the crown 30; however, the invention is not limited thereto, and may be formed without disposing the cushion rubber 29.

In the second embodiment, the covered cord member 26B is wound in a spiral shape onto the crown portion 16; however, the invention is not limited thereto, and the covered cord member 26B may be wound so as to be discontinuous in the width direction.

In the second embodiment, the covering resin material 27 forming the covered cord member 26B is a thermoplastic material, and the covering resin material 27 is heated to a melted or softened state and the covered cord member 26B is welded to the outer peripheral face of the crown portion 16; however, the invention is not limited thereto. The covered cord member 26B may be bonded to the outer peripheral face of the crown portion 16, by using a bonding agent or the like without heating the covering resin material 27.
The covering resin material 27 forming the covered cord member 26B may be a thermosetting resin, the covered cord member 26B may be adhered to the outer peripheral face of the crown portion 16 without heating, by using an adhesive or the like.
Moreover, the covering resin material 27 forming the covered cord member 26B may be a thermosetting resin, and the tire case 17 may be formed with a resin material. In such cases, the covered cord member 26B may be adhered to the outer peripheral face of the crown portion 16, by an adhesive or the like. The locations of the tire case 17 where the covered cord member 26B is disposed may be heated to a melted or softened state, and the covered cord member 26B may be welded to the outer peripheral face of the crown portion 16. Moreover, the covering resin material 27 forming the covered cord member 26B may be a thermoplastic material, and the tire case 17 may be formed with a resin material. In such cases, the covered cord member 26B may be adheredto the outer peripheral face of the crown portion 16, by an adhesive or the like. The covering resin material 27 may be heated to a melted or softened state while heating the locations of the tire case 17 where the covered cord member 26B is disposed to a melted or softened state, and the covered cord member 26B may be welded to the outer peripheral face of the crown portion 16. In cases in which both the tire case 17 and the covered cord member 26B are heated to a melted or softened state, joint strength is improved due to the good mixing between the two members. In cases in which the resin material forming the tire case 17 and the covering resin material 27 forming the covered cord member 26B are both resin materials, they are preferably the same type of thermoplastic material, and are particularly preferably the same thermoplastic material.
The outer peripheral face 17S of the tire case 17 that has been subjected to roughening treatment may also be subjected to corona treatment, plasma treatment or the like, to activate the surface of the outer peripheral face 17S and raise the hydrophilic properties before coating with an adhesive.

The sequence for manufacturing the tire 200 is not limited to the sequence of the second embodiment, and may be appropriately modified.

Although embodiments have been explained above as embodiments of the invention, these embodiments are merely examples, and various modifications may be implemented within a range not departing from the spirit of the invention. Obviously the scope of rights of the invention is not limited to these embodiments.

### Examples

More specific explanation regarding the invention is given below based on Examples. However the invention is not limited thereto.

### Evaluation of Bending Elastic Modulus

Test pieces were prepared employing the resin materials listed in the following Tables, and the bending elastic modulus of the test pieces were measured using a method in accordance with JIS K7171 (1994).
More specifically, prepared pellets were employed, and injection molding was performed using a SE30D, manufactured by Sumitomo Heavy Industries, Ltd., at a molding temperature of from 200°C to 320°C, and a metal mold temperature of from 50°C to 160°C. Strip shaped test pieces were prepared using a metal mold of 10 mm × 100 mm with a thickness of 4 mm.

Then, the bending elastic modulus (secant method) of each of the strip shaped test pieces was measured under conditions of a test speed of 2 mm/min², a distance L of 64 mm between support points, an indenter radius R1 of 5 mm, and a radius R2 of the support of 5 mm using a Shimadzu Autograph AGS-J (5KN), manufactured by Shimadzu Corporation,. The results are shown in the Tables below.

### Evaluation of Ride Comfort

A tire was formed similarly to in the first embodiment described above using the resin materials listed in the Tables below. The thickness of the side portions was 3 mm and the thickness of the crown portion was 3 mm. The numerical values of the bending elastic modulus of the side portions and the crown portion were the same as those of the resin material shown in the Tables. The tire was fitted to a car, and a sensory evaluation of ride comfort was performed, and the results were evaluated based on the following criteria. Instances of being unable to produce a tire, or damage occurring during testing were evaluated C. The thicknesses of the tire case were measured by cutting the tire case at each portion and using an external micrometer conforming to JIS B7052.

### Criteria

A: no problems with the ride comfort
B: slightly hard feeling to the ride comfort
C: significantly hard feeling to ride comfort

**Table 1**

| | Example 1 | Example 2 | Examplee 3 | Example 4 | Example 5 | Example 6 | Example 7 |
|---|---|---|---|---|---|---|---|
| Resin Material | PE1 | PE2 | PA1 | PA2 | PA3 | PA4 | PA5 |
| Bending Elastic Modulus (23°C) (MPa) | 192.995 | 379.88 | 180.505 | 272.71 | 551.05 | 240.125 | 161.25 |
| Ride Comfort | A | A | A | A | B | A | A |

**Table 2**

| | Comparative Example 1 | Comparative Example 2 | Comparative Example 3 | Comparative Example 4 | Comparative Example 5 |
|---|---|---|---|---|---|
| Resin Material | PE3 | PO1 | PBT | PPS | PE4 |
| Bending Elastic Modulus (23°C) (MPa) | 24.2355 | 23.7155 | 2485.7 | 3445.6 | 98.6 |
| Ride Comfort | C | C | C | C | C |

**Table 3**

| | Example 8 | Example 9 | Example 10 |
|---|---|---|---|
| Resin Material | PO2 | PO3 | PO4 |
| Bending Elastic Modulus (23°C) (MPa) | 567.98 | 290.025 | 261.56 |
| Ride Comfort | B | A | A |

The components in the Tables were the following.
- PE1: thermoplastic polyester-based elastomer
   ("HYTREL 5557", manufactured by Du Pont-Toray Co., Ltd.)
- PE2: thermoplastic polyester-based elastomer
   ("HYTREL 6347", manufactured by Du Pont-Toray Co., Ltd.)
- PA1: thermoplastic polyamide-based elastomer
   ("UBESTA XPA9048X1", manufactured by Ube Industries, Ltd.)
- PA2: thermoplastic polyamide-based elastomer
   ("UBESTA XPA9055X1", manufactured by Ube Industries, Ltd.)
- PA3: thermoplastic polyamide-based elastomer
   ("UBESTA XPA9063X1", manufactured by Ube Industries, Ltd.)
- PA4: thermoplastic polyamide-based elastomer
   ("VESTAMID E55-S4", manufactured by Daicel-Evonik Ltd.)
- PA5: thermoplastic polyamide-based elastomer
   ("VESTAMID E55-K1W2", manufactured by Daicel-Evonik Ltd.)
- PE3: thermoplastic polyester-based elastomer
   ("HYTREL 3046", manufactured by Du Pont-Toray Co., Ltd.)
- PE4: thermoplastic polyester-based elastomer
   ("HYTREL 4767", manufactured by Du Pont-Toray Co., Ltd.)
- PO1: thermoplastic polyolefin-based elastomer
   ("MILASTOMER 7030NS", manufactured by Mitsui Chemicals, Inc.)
- PBT: polybutylene terephthalate
   ("DURANEX 2002", manufactured by Polyplastics Co., Ltd.)
- PPS: polyphenylene sulfide
   ("FORTRAN 2000", manufactured by Polyplastics Co., Ltd.)
- PO2: thermoplastic polyolefin-based elastomer
   ("ESPOLEX 903", manufactured by Sumitomo Chemical Co., Ltd.)
- PO3: thermoplastic polyolefin-based elastomer
   ("THERMORUN 5850", manufactured by Mitsubishi Chemical Corporation)
- PO4: thermoplastic polyolefin-based elastomer
   ("PRIME TPO J-5710" manufactured by Prime Polymer Co., Ltd.)

As can be seen from the Tables, the ride comfort was excellent for the tires having a bending elastic modulus of from 100 MPa to 1000 MPa. In contrast, although the resin material of Comparative Examples 1 and 5 employed a thermoplastic polyester-based elastomer similarly to in Examples 1 and 2, the bending elastic modulus was less than 100 MPa, and therefore tire forming could not be achieved. Comparative Examples 3 and 4 are examples of employing non-elastomer thermoplastic resins, and the elastic modulus was too high, giving a hard feeling to ride comfort.

In the following Examples 11 to 13, tires were formed employing different resin materials for the side portions and the crown portion. The thickness of the side portions was 3 mm, and the thickness of the crown portion was 3 mm. The numerical value of bending elastic modulus of the side portion and the crown portion are the same as those of the resin materials illustrated in the Tables. The tires were fitted to a car, and a sensory evaluation of ride comfort was performed, and the results were evaluated based on the following criteria. Instances of being unable to produce a tire, or damage occurring during testing were evaluated C. The thicknesses of the tire case were measured by cutting the tire case at each portion and using an external micrometer in accordance with JIS B7052.

**Table 4**

| | | Example 11 | Example 12 | Example 12 |
|---|---|---|---|---|
| Crown Portion | Resin Material | PA3 | PA4 | PE1 |
| | Bending Elastic Modulus (23°C) (MPa) | 551.05 | 240.125 | 192.995 |
| Side Portions | Resin Material | PA2 | PA5 | PE4 |
| | Bending Elastic Modulus (23°C) (MPa) | 272.71 | 161.25 | 98.6 |
| Ride Comfort | | A | A | B |

As can be seen from the Tables, in the Examples in which different resin material were employed for the resin material employed as the crown portion and the resin material employed as the side portions, tires in which the bending elastic modulus of the side portions was from 100 MPa to 1000 MPa had particularly excellent ride comfort.

Note that the disclosure in Japanese Patent Application No. 2012-044595 is incorporated by reference in the present specification.

## Claims

1. A tire comprising:
a tire frame formed from a resin material and having a ring shape, wherein
the resin material has a bending elastic modulus of from 100 MPa to 1000 MPa.

2. The tire of claim 1, wherein the tire frame has a bending elastic modulus of from 100 MPa to 1000 MPa in at least a side portion.

3. The tire of claim 1 or claim 2, wherein the resin material comprises a thermoplastic resin.

4. The tire of any one of claims 1 to 3, wherein the resin material comprises a thermoplastic elastomer.

5. The tire of any one of claims 1 to 4, wherein the resin material comprises at least one selected from a thermoplastic polyester-based elastomer or a thermoplastic polyamide-based elastomer.

6. The tire of any one of claims 1 to 5, wherein the resin material of the tire frame has a bending elastic modulus of from 100 MPa to 700 MPa.

7. The tire of any one of claims 1 to 6, wherein the tire frame has a bending elastic modulus of from 100 MPa to 700 MPa in at least the side portion.

8. The tire of any one of claims 1 to 7, wherein the resin material employed in a crown portion is the same resin material as that employed in the side portion.

9. The tire of any one of claims 1 to 8, wherein the resin material employed in the crown portion is a different resin material from that employed in the side portion.
